# NEUE EUROPÄISCHE PATENTSCHRIFT

(11) **EP 1 174 633 B2**
(45) Veröffentlichungstag und Bekanntmachung des Hinweises auf die Entscheidung über den Einspruch: **04.09.2013**
(45) Hinweis auf die Patenterteilung: 21.03.2007
(21) Anmeldenummer: 01112877.4
(22) Anmeldetag: 01.06.2001
(51) Int. Cl.: F16D 25/10, F16D 25/12, F16D 21/06

(54) **Mehrfach-Kupplungseinrichtung**
Multiple clutch device
Installation d'embrayages multiples

(30) Priorität: 17.07.2000 DE 10034730; 29.03.2001 DE 10115453
(43) Veröffentlichungstag der Anmeldung: 23.01.2002
(60) Teilanmeldung: 07005654.4
(73) Patentinhaber: ZF Friedrichshafen AG, 80846 Friedrichshafen (DE)
(72) Erfinder: Geiger, Martin, Dipl.-Ing. (FH), 97261 Güntersleben (DE); Schierling, Bernhard, Dipl.-Ing. (FH), 97273 Kürnach (DE); Steiner, Eduard, Dipl.-Ing. (FH), 97228 Rottendorf (DE); Kundermann, Wolfgang, Dipl.-Ing., 97422 Schweinfurt (DE); Kraus, Paul, Dipl.-Ing., 97464 Niederwern (DE)

(56) Entgegenhaltungen:
- EP-A- 0 931 951
- EP-A- 1 052 421
- EP-A- 1 195 537
- WO-A-99/51889
- WO-A1-85//00206
- WO-A2-99//51889
- DE-A1- 2 422 626
- DE-A1- 2 854 051
- DE-A1- 3 047 778
- DE-A1- 3 414 582
- DE-A1- 3 445 333
- DE-A1- 3 619 843
- DE-A1- 3 838 865
- DE-A1- 10 004 179
- DE-A1- 10 034 730
- DE-A1- 19 652 571
- DE-A1- 19 821 164
- DE-A1- 19 937 545
- DE-B- 1 111 888
- DE-U1- 9 114 528
- FR-A1- 2 799 251
- GB-A- 2 191 252
- GB-A- 2 191 252
- JP-A- 2000 035 056
- US-A- 2 687 198
- US-A- 2 884 107
- US-A- 3 366 211
- US-A- 3 610 384
- US-A- 3 768 613
- US-A- 3 964 587
- US-A- 4 966 270

## Beschreibung

Die Erfindung betrifft eine Mehrfach-Kupplungseinrichtung, insbesondere Doppel-Kupplungseinrichtung, nach dem Oberbegriff des Anspruchs 1.

Doppel-Kupplungseinrichtungen sind beispielsweise aus US-A-4,966,270 oder US 2,687,198 bekannt.

Eine andere Kupplungseinrichtung ist beispielsweise aus der EP 0 931 951 A1 bekannt. Die Kupplungseinrichtung dient zur Verbindung des Antriebs eines Kraftfahrzeugs mit einem mehrstufigen Schaltgetriebe über zwei bevorzugt automatisiert betätigte Reibungskupplungen, wobei jeder dieser beiden Reibungskupplungen jeweils ein Ausrücksystem zugeordnet ist, so dass die beiden Reibungskupplungen unabhängig voneinander ein- oder ausrückbar sind. Eine Kupplungsscheibe einer der beiden Reibungskupplungen ist auf einer zentralen Getriebeeingangswelle drehfest angeordnet, während eine Kupplungsscheibe der anderen Reibungskupplung an einer die zentrale Getriebeeingangswelle umgreifenden, als Hohlwelle ausgebildeten zweiten Getriebeeingangswelle drehfest angreift. Die bekannte Doppelkupplung ist mit einer festen Druckplatte der einen Reibungskupplung an einem Schwungrad einer Brennkraftmaschine angeordnet. Die Anordnung der Doppelkupplung in einem Antriebsstrang entspricht insoweit weitgehend der Anordnung herkömmlicher (Einfach-) Reibungskupplungen im Antriebsstrang.

Doppelkupplungseinrichtungen (kurz: Doppelkupplungen) der eingangs genannten Art haben in jüngerer Zeit ein größeres Interesse gefunden und bestehen im Allgemeinen aus zwei nass- oder trockenlaufenden Kupplungen, die wechselseitig - ggf. auch mit Überschneidungen - geschaltet werden. Insbesondere im Zusammenhang mit einem mehrstufigen Schaltgetriebe bieten derartige Kupplungen die Möglichkeit, Schaltvorgänge zwischen jeweils zwei Übersetzurigsstufen des Getriebes ohne Zugkraftunterbrechung vorzunehmen.

Doppelkupplungseinrichtungen bieten prinzipiell die Möglichkeit, bei besonders schwierigen, speziell im Rennsport üblichen Anfahrvorgängen beide Kupplungen gemeinsam zu beaufschlagen. Hierzu kann einerseits das Fahrpedal ggf. bis zum Anschlag ausgelenkt werden, während gleichzeitig das Kraftfahrzeug unter Aufwendung der maximalen Bremskraft so lange im Wesentlichen im Stillstand gehalten wird, bis die Kupplung ihren optimalen Übertragungspunkt erreicht hat. Wenn im Augenblick des Erreichens des optimalen Übertragungspunkts die Bremswirkung aufgehoben wird, wird das Fahrzeug mit maximaler Beschleunigung anfahren. Derartige Anfahrvorgänge kommen auch für Kraftfahrzeuge mit relativ schwacher Motorisierung, also nicht nur im Rennsport, unter extremen Anfahrbedingungen in Betracht, beispielsweise zum Anfahren an einem Hindernis.

Erfindungsgemäß wird vorgeschlagen, dass eine Eingangsseite der Mehrfach-Kupplungseinrichtung über eine Wandung, die einen Nassraum von einem außerhalb der Wandung befindlichen Trockenraum abgrenzt, und eine Torsionsschwingungsdämpferanordnung mit einem ersten Lamellenträger für ein in einem Nassraum angeordnetes Lamellenpaket einer ersten Lamellen-Kupplungsanordnung und mit einem zweiten Lamellenträger für ein in dem Nassraum angeordnetes Lamellenpaket einer zweiten Lamellen-Kupplungsanordnung in Drehmitnahmeverbindung steht, wobei die Torsionsschwingungsdämpferanordnung in den Nassraum integriert ist und zwischen den Lamellenträgern der Lamellen-Kupplungsanordnungen und der Eingangsseite wirkt.

Es lassen sich die folgende Vorteile erreichen. Man kann insbesondere vorsehen, dass der Nassraum mit einer Kühlmittel-Vollfüllung, insbesondere Öl-Vollfüllung, betrieben wird, wodurch im Falle einer Ausbildung der Kupplungsanordnungen als Lamellen-Kupplungsanordnungen, deren Lamellen besser von dem Kühlmittel durchströmt werden und dementsprechend eine bessere Kühlung erreicht wird. Gegenüber einer Vollfüllung eines "stationären" Aufnahmeraums zwischen Getriebe und Antriebseinheit wird eine wesentliche Reduktion des Ölvolumens erreicht. Überdies werden Dichtungsprobleme etwa an den Aufnahmeraum an begrenzenden Flügelstellen zwischen dem Getriebe und der Antriebseinheit (dem Motor) vermieden.

Ein Momentenübertragungsweg verlauft zwischen der Eingangsseite und wenigstens einer der Ausgangsseiten der Mehrfach-Kupplungseinrichtung über die Wandung.

Die Wandung steht mit einem Lamellenträger, vorzugsweise ein Außenlamellenträger, für Lamellen, ggf. Außenlamellen, einer als Lamellen-Kupplungsanordnungausgebildeten Kupplungsanordnung der Kupplungsanordnungen in Drehmitnahmeverbindung über eine Torsionsschwingungsdämpferanordnung, und Koppelt den Lamellenträger mit der Eingangsseite oder einer der Ausgangsseiten oder dient als Eingangsseite oder Ausgangsseite. Es wird auf die obigen Ausführungen zur Integration der Torsionsschwingungsdämpferanordnung in die Mehrfach-Kupplungseinrichtung mit Wandung verwiesen.

Die Mehrfach-Kupplungseinrichtung kann ansonsten wie eine Mehrfach-Kupplungseinrichtung des vorstehend beschriebenen Antriebssystems ausgebildet sein.

In den Nassraum ist eine Torsionsschwingungsdämpferanordnung integriert. Hierzu wirkt die Torsionsschwingungsdämpferanordnung zwischen der Eingangsseite der Kupplungseinrichtung, ggf. einer Kupplungseinrichtungsnabe, und der Wandung, wobei die Wandung mit einer Eingangsseite einer der Kupplungsanordnungen, einem/dem Lamellenträger dieser Kupplungsanordnung, in Drehmitnahmeverbindung steht oder dass die Torsionsschwingungsdämpferanordnung zwischen der Eingangsseite einer der Kupplungsanordnungen, einem/dem Lamellenträger dieser Kupplungsanordnung, und der Wandung wirkt.

Wie schon erwähnt, kann man die Kupplungseinrichtung mit einer Vollfüllung an Kühlöl oder dergleichen betreiben. Der Nassraum ist dann also im Wesentlichen vollständig mit dem Betriebsmedium (ggf. Kühlöl) gefüllt. Eine solche Vollfüllung bietet Vorteile und ermöglicht insbesondere ein einfaches Aufrechterhalten eines Kühlölkreislaufs durch den Nassraum. Fliehkraftbedingt muss zum Abführen des im Nassraum enthaltenen Betriebsmediums bzw. zum Zuführen von neuem Betriebsmedium allerdings unter Umständen ein von der Drehzahl abhängiger Betriebsmediumdruck überwunden werden, so dass - in diesem Fall - Betriebsmedium nur unter Druck zugeführt bzw. abgeführt werden kann.

Ein Nachteil einer Vollfüllung ist, dass im Falle von Lamellen-Kupplungsanordnungen die Lamellen vollständig im Betriebsmedium (Kühlöl) angeordnet sind, so dass entsprechende Schleppmomente auftreten. Diese sind unter Umständen nicht wünschenswert.

Möchte man zur Vermeidung von Schleppmomenten bzw. zur Vermeidung einer Zuführung/Rückführung von Öl unter Druck die Kupplungseinrichtung nicht mit einer Vollfüllung betreiben, so stellt sich die Frage, wie trotzdem ein Betriebsmediumkreislauf durch den Nassraum aufrecht erhalten werden kann. Man könnte daran denken, radial außen an einem von der den Nassraum begrenzenden Wandung gebildeten Kupplungsgehäuse Abführöffnungen und daran angeschlossene Rückführkanäle vorzusehen. Der hierfür erforderliche Bauteilaufwand dürfte allerdings als nicht sehr gering zu erachten sein.

Demgegenüber wird nach einer besonders bevorzugten Weiterbildung der Kupplungseinrichtung vorgeschlagen, dass diese eine im Nassraum angeordneteBetriebsmedium-Abführeinrichtung (insbesondere Kühlöl-Abführeinrichtung) aufweist, die Betriebsmedium unter Schwerkraft-Einwirkung oder/und unter Ausnutzung von in sich bewegendem Betriebsmedium gespeicherter kinetischer Energie aus einem - bezogen auf Drehachse der Kupplungseinrichtung - radial äußeren, vorzugsweise - bezogen auf eine Vertikalrichtung - oberen Bereich des Nassraums zu einem radial inneren, vorzugsweise - bezogen auf die Vertikalrichtung - weiter unten liegenden Bereich des Nassraums und dann aus dem Nassraum heraus abführt, gegebenenfalls um einen Betriebsmediumkreislauf durch den Nassraum vorzusehen.

Die Betriebsmedium-Abführeinrichtung kann wenigstens ein gegenüber der Wandung stationäres, dieser zumindest bereichsweise benachbartes Abführelement mit wenigstens einer das Betriebsmedium führenden oder/und ablenkenden Führungsfläche aufweisen.

Eine vorteilhafte Ausgestaltung des Abführelements zeichnet sich dadurch aus, dass wenigstens ein ggf. wandungsartiger Abschnitt des Abführelements wenigstens einen, wenigstens eine der Kupplungsanordnungen zumindest bereichsweise radial außen umgebenden, vorzugsweise in einem bezogen auf die Vertikalrichtung oberen Bereich der Kupplungseinrichtung angeordneten ersten Führungsflächenabschnitt aufweist, der zusammen mit einer Innenoberfläche eines benachbarten Abschnitts der Wandung einen ersten Spalt begrenzt, der Betriebsmedium aufnehmen kann. Ferner wird vorgeschlagen, dass wenigstens ein gegebenenfalls wandungsartiger Abschnitt des Abführelements wenigstens einen auf einer axialen Seite der Kupplungsanordnungen angeordneten, sich in radialer bzw. vertikaler Richtung erstreckenden zweiten Führungsflächenabschnitt aufweist, der zusammen mit einer Innenoberfläche eines radial äußeren Abschnitts der Wandung einen zweiten Spalt begrenzt, der Betriebsmedium aufnehmen kann, wobei der zweite Führungsflächenabschnitt vorzugsweise - sofern vorhanden - am ersten Führungsflächenabschnitt angeschlossen ist und der zweite Spalt vorzugsweise - sofern vorhanden - am ersten Spalt angeschlossen ist.

Das Betriebsmedium lässt sich besonders wirkungsvoll dann abführen, wenn das Abführelement wenigstens eine Führungsschaufel aufweist, die rotierendes Betriebsmedium in radialer oder/und axialer Richtung ablenkt. Hierzu wird weiterbildend vorgeschlagen, dass die Führungsschaufel sich entlang einer Führungsfläche eines Schaufelträgers erstreckt und von dieser Führungsfläche in Richtung zu einer Innenoberfläche der Wandung vorsteht, gegebenenfalls in den ersten bzw. zweiten Spalt.

Der Schaufelträger kann in der Art einer Wandung ausgeführt sein. In diesem Fall ist es zweckmäßig, wenn in einem radial außerhalb wenigstens einer der Kupplungsanordnungen liegenden Abschnitt Betriebsmedium-Durchlassöffnungen im Schaufelträger vorgesehen sind, um Betriebsmedium nach radial außen (ggf. in den ersten Spalt) durchzulassen.

Eine vorteilhafte Ausführungsform zeichnet sich dadurch aus, dass der sich über einen vertikal oberen Bereich der Kupplungseinrichtung erstreckende erste Spalt in einem radial mittleren Bereich der Kupplungseinrichtung an einem aus dem Nassraum herausführenden Abführkanal angeschlossen und nach unten verschlossenen oder verengt ist, sodass zumindest eine wesentlicher Teil des im Spalt geführten Betriebsmedium über den Abführkanal abfließt.

Generell wird vorgeschlagen, dass das Abführelement das abzuführende Betriebsmedium zu einem/dem in einer Lagerhülsenanordnung der Kupplungseinrichtung ausgebildeten Abführkanal führt, der an einer gegebenfalls im Getriebegehäuse ausgebildeten Abführleitung angeschlossen oder anschließbar ist. In einer vorteilhaften Ausführungsform zeichnet sich die Lagerhülsenanordnung dadurch aus, dass diese wenigstens eine ein von der Wandung gebildetes Kupplungsgehäuse verdrehbar lagernde erste Lagerhülse, wenigstens eine wenigstens eine stationäre Komponente der Betriebsmedium-Abführeinrichtung lagernde, vorzugsweise unmittelbar gegen Verdrehung abgestützte oder abstützbare zweite Lagerhülse und wenigstens eine eingangsseitige Drehkomponenten, insbesondere Lamellenträger, der Kupplungseinrichtung an radial geschachtelten Getriebeeingangswellen lagernde dritte Lagerhülse aufweist.

Die Erfindung betrifft ferner einen Antriebsstrang für ein Kraftfahrzeug mit einer zwischen einer Antriebseinheit (ggf. eine Brennkraftmaschine) und einem Getriebe angeordneten Kupplungseinrichtung nach der Erfindung.

Die Erfindung wird im Folgenden anhand von in den Figuren gezeigten Ausführungsbeispielen näher erläutert.
- Fig. 1: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen.
- Fig. 2: zeigt in einer der Fig. 1 entsprechenden Darstellungen eine Doppelkupplung mit zugeordnetem Torsionsschwingungsdämpfer.
- Fig. 3-7: zeigen Ausführungsformen Doppelkupplungen, die jeweils einen in die Kupplung integrierten Torsionsschwingungsdämpfer aufweisen und teilweise erfindungsgemäße Ausführungsbeispiele der Fig. 4 bis 7) mit einem geschlossenen Nassraum ausgeführt sind, der von einer sich mitdrehenden Wandung begrenzt ist.
- Fig. 8-10: zeigen nicht erfindungsgemäße Antriebssysteme umfassend eine erfindungsgemäße Doppelkupplung in Kombination mit einem Torsionsschwingungsdämpfer und einer Elektromaschine, beispielsweise ein sogenannter Kurbelwellenstartergenerator.
- Fig. 11-17: zeigen weitere Auführungsformen Doppelkupplungen, die jeweils einen in die Kupplung integrierten Torsionsschwingungsdämpfer aufweisen und mit einem geschlossenen Nassraum ausgeführt sind, der von einer sich mitdrehenden Wandung begrenzt ist, teilweise (Ausführungsbeispiele der Fig. 14 bis 17) in Kombination mit einer Elektromaschine, beispielsweise ein sogenannter Kurbelwellenstartergenerator.

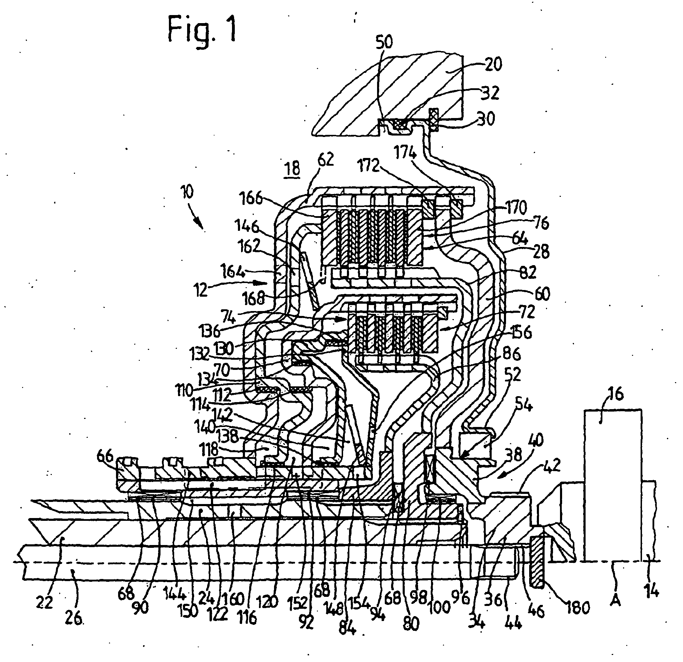

Die in Fig 1-3, 8-10, 12, 13, 17 dargestellte Kupplungen sind nicht erfindungsgemäß.

Fig. 1 zeigt eine in einem Anriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe dient, wie noch näher erläutert wird.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung, wie das in Fig. 1 gezeigte Ausführungsbeispiel, nasslaufende Reibungskupplungen, beispielsweise Membrankupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 1 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierten Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 1 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanorndung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung o. dgl. ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 1 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer zu einer Achse A der Doppelkupplung 12 erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnüng in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer an einer Druckmediumsversorgung, hier die bereits erwähnte Ölpumpe, angeschlossenen Drucksteuereinrichtung, ggf. ein Steuerventil, in Verbindung, wobei der Druckmediumskanal 122 über eine das Ringteil 66 aufnehmende, ggf. getriebefeste Anschlusshülse an der Drucksteuereinrichtung angeschlossen ist. Zum Ringteil 66 ist in diesem Zusammenhang zu erwähnen, dass dieses für eine einfachere Herstellbarkeit insbesondere hinsichtlich des Druckmediumkanals 122 sowie eines weiteren Drückmediumkanals zweiteilig hergestellt ist mit zwei ineinander gesteckten hülsenartigen Ringteilabschnitten, wie in Fig. 1 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einer/der Drucksteuereinrichtung angeschlossen. Mittels der Drucksteuereinrichtung(en) kann an den beiden Druckkammern 118 und 140 wahlweise (ggf. auch gleichzeitig) von der Druckmediumsquelle (hier Ölpumpe) aufgebrachter Druck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 112, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 133 im Fahrbetrieb mit der Kupplungswelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 84 und dem Ringabschnitt 38 der Kupplungsnabe 34 (durch die Lager 98 und 100) nach radial außen strömt.

Da sich das nach radial außen strömende Kühlöl benachbart einem radial äußeren Abschnitt des der ersten Lamellen-Kupplungsanordnung 64 zugeordneten Betätigungskolbens 110 ansammeln könnte und zumindest bei größeren Drehzahlen fliehkraftbedingt die Einrückbewegung dieses Kolbens behindern könnte, weist der Kolben 110 wenigstens eine Druckausgleichsöffnung 162 auf, die einen Kühlölfluss von einer Seite des Kolbens zur anderen ermöglicht. Es wird dementsprechend zu einer Ansammlung von Kühlöl auf beiden Seiten des Kolbens kommen mit entsprechender Kompensation fliehkraftbedingt auf den Kolben ausgeübter Druckkräfte. Ferner wird verhindert, dass andere auf einer Wechselwirkung des Kühlöls mit dem Kolben beruhende Kräfte die erforderlichen axialen Kolbenbewegungen behindern. Es wird hier beispielsweise an hydrodynamische Kräfte o. dgl. gedacht sowie an ein "Festsaugen" des Kolbens am Außenlamellenträger 62.

Es ist auch möglich, wenigstens eine Kühlölabflussöffnung im sich radial erstreckenden, radial äußeren Bereich des Außenlamellenträgers 62 der ersten Lamellen-Kupplungsanordnung 64 vorzusehen. Eine derartige Kühlölabflussöffnung ist bei 164 gestrichelt angedeutet. Um trotzdem eine hinreichende Durchströmung des Lamellenpakets 76 der ersten Lamellen-Kupplungsanordnung 64 mit Kühlfluid (Kühlöl) zu gewährleisten, kann ein Kühlölleitelement (allgemein ein Kühlfluidleitelement) vorgesehen sein. In Fig. 1 ist gestrichelt angedeutet, dass eine benachbarte Endlamelle 166 des Lamellenpakets 76 einen Kühlölleitabschnitt 168 aufweisen könnte, so dass die Endlamelle 166 selbst als Kühlölleitelement dient.

Im Hinblick auf eine einfache Ausbildung der Drucksteuereinrichtung für die Betätigung der beiden Lamellen-Kupplungsanordnungen wurde bei dem Ausführungsbeispiel der Fig. 1 vorgesehen, dass eine für die radial innere Lamellen-Kupplungsanordnung 72 bezogen auf einen Betätigungsdruck an sich gegebene, im Vergleich zur anderen Kupplungsanordnung 64 geringere Momentenübertragungsfähigkeit (aufgrund eines geringeren effektiven Reibradius als die radial äußere Kupplungsanordnung 64) zumindest teilweise kompensiert wird. Hierzu ist die der Druckkammer 140 zugeordnete Druckbeaufschlagungsfläche des Kolbens 130 größer als die der Druckkammer 118 zugeordnete Druckbeaufschlagungsfläche des Kolbens 110, so dass bei gleichem Hydrauliköldruck in den Druckkammern auf den Kolben 130 größere axial gerichtete Kräfte als auf den Kolben 110 ausgeübt werden.

Es sollte noch erwähnt werden, dass durch eine radiale Staffelung der den Kolben zugeordneten Dichtungen, speziell auch eine axiale Überlappung von wenigstens einigen der Dichtungen, eine gute Ausnutzung des zur Verfügung stehenden Bauraums ermöglicht.

Bei den Lamellenpaketen 74, 76 können Maßnahmen zur Vermeidung der Gefahr einer Überhitzung getroffen sein zusätzlich zu der schon beschriebenen Zufuhr von Kühlöl und der Ausbildung von (in der Fig. 1 nur schematisch angedeuteten) Kühlöldurchtrittsöffnungen in den Lamellenträgern. So ist es vorteilhaft, wenigstens einige der Lamellen als "Wärmezwischenspeicher" zu nutzen, die etwa während eines Schlupfbetriebs entstehende, die Wärmeabfuhrmöglichkeiten mittels des Kühlfluids (hier Kühlöls) oder durch Wärmeleitung über die Lamellenträger momentan überfordernde Wärme zwischenspeichern, um die Wärme zu einem späteren Zeitpunkt, etwa in einem ausgekuppelten Zustand der betreffenden Lamellen-Kupplungsanordnung, abführen zu können. Hierzu sind bei der radial inneren (zweiten) Lamellen-Kupplungsanordnung reibbelaglose, also keinen Reibbelag tragende Lamellen axial dicker als Lamellentragelemente von Reibbelag-tragenden Lamellen ausgebildet, um für die reibbelaglosen Lamellen jeweils ein vergleichsweise großes Materialvolumen mit entsprechender Wärmekapazität vorzusehen. Diese Lamellen sollten aus einem Material hergestellt werden, das eine nennenswerte Wärmespeicherfähigkeit (Wärmekapazität) hat, beispielsweise aus Stahl. Die Reibbelag-tragenden Lamellen können im Falle einer Verwendung von üblichen Reibbelägen, beispielsweise aus Papier, nur wenig Wärme zwischenspeichern, da Papier eine schlechte Wärmeleitfähigkeit hat.

Die Wärmekapazität der die Reibbeläge tragenden Reibbelagtragelemente können ebenfalls als Wärmespeicher verfügbar gemacht werden, wenn man anstelle von Belagmaterialien mit geringer Leitfähigkeit Belagmaterialien mit hoher Leitfähigkeit verwendet. In Betracht kommt die Verwendung von Reibbelägen aus Sintermaterial, das eine vergleichsweise hohe Wärmeleitfähigkeit hat. Problematisch an der Verwendung von Sinterbelägen ist allerdings, dass Sinterbeläge einen degressiven Verlauf des Reibwerts *µ* über einer Schlupfdrehzahl (Relativdrehzahl ΔN zwischen den reibenden Oberflächen) aufweisen, also dass d*µ*/dΔN <0 gilt. Ein degressiver Verlauf des Reibwerts ist insoweit nachteilig, als dieser eine Selbsterregung von Schwingungen im Antriebsstrang fördern kann bzw. derartige Schwingungen zumindest nicht dämpfen kann. Es ist deshalb vorteilhaft, wenn in einem Lamellenpaket sowohl Lamellen mit Reibbelägen aus Sintermaterial als auch Lamellen mit Reibbelägen aus einem anderen Material mit progressivem Reibwertverlauf über der Schlupfdrehzahl (d*µ*/dΔN > 0) vorgesehen sind, so dass sich für das Lamellenpaket insgesamt ein progressiver Reibwertverlauf über der Schlupfdrehzahl oder zumindest näherungsweise ein neutraler Reibwertverlauf über der Schlupfdrehzahl (dµ/dΔN = 0) ergibt und dementsprechend eine Selbsterregung von Schwingungen im Antriebsstrang zumindest nicht gefördert wird oder - vorzugsweise - Drehschwingungen im Antriebsstrang sogar (aufgrund eines nennenswert progressiven Reibwertverlaufs über der Schlupfdrehzahl) gedämpft werden.

Es wird hier davon ausgegangen, dass beim Beispiel der Fig. 1 das Lamellenpaket 74 der radial inneren Lamellen-Kupplungsanordnung 60 ohne Sinterbeläge ausgeführt ist, da die radial äußere Lamellen-Kupplungsanordnung 64 vorzugsweise als Anfahrkupplung mit entsprechendem Schlupfbetrieb eingesetzt wird. Letzteres, also die Verwendung der radial äußeren Lamellen-Kupplungsanordnung als Anfahrkupplung, ist insoweit vorteilhaft, als dass aufgrund des größeren effektiven Reibradius diese Lamellen-Kupplungsanordnung mit geringeren Betätigungskräften (für die gleiche Momentenübertragungsfähigkeit) betrieben werden kann, so dass die Flächenpressung gegenüber der zweiten Lamellen-Kupplungsanordnung reduziert sein kann. Hierzu trägt auch bei, wenn man die Lamellen der ersten Lamellen-Kupplungsanordnung 64 mit etwas größerer radialer Höhe als die Lamellen der zweiten Lamellen-Kupplungsanordnung 72 ausbildet. Gewünschtenfalls können aber auch für das Lamellenpaket 74 der radial inneren (zweiten) Lamellen-Kupplungsanordnung 72 Reibbeläge aus Sintermaterial verwendet werden, vorzugsweise - wie erläutert - in Kombination mit Reibbelägen aus einem anderen Material, etwa Papier.

Während bei dem Lamellenpaket 74 der radial inneren Lamellen-Kupplungsanordnung 72 alle Innenlamellen Reibbelag-tragende Lamellen und alle Außenlamellen belaglose Lamellen sind, wobei die das Lamellenpaket axial begrenzenden Endlamellen Außenlamellen und damit belaglose Lamellen sind, sind beim Lamellenpaket 76 der ersten Lamellen-Kupplungsanordnung 64 die Innenlamellen belaglose Lamellen und die Außenlamellen einschließlich der Endlamellen 166, 170 Reibbelag-tragende Lamellen. Wenigstens die Endlamellen 166 und 168 weisen nach einer bevorzugten Ausbildung axial wesentlich dickere Belagtragelemente als die Belagtragelemente der anderen Außenlamellen auf und sind mit Belägen aus Sintermaterial ausgebildet, um die ein vergleichsweise großes Volumen aufweisenden Belagtragelemente der beiden Endlamellen als Wärmezwischenspeicher nutzbar zu machen. Wie beim Lamellenpaket 74 sind die belaglosen Lamellen axial dicker als die Lamellentragelemente der Reibbelag- tragenden Lamellen (mit Ausnahme der Endlamellen), um eine vergleichsweise große Wärmekapazität zur Wärmezwischenspeicherung bereitzustellen. Die axial innen liegenden Außenlamellen sollten zumindest zum Teil Reibbeläge aus einem anderen, einen progressiven Reibwertverlauf zeigenden Material, aufweisen, um für das Lamellenpaket insgesamt zumindest eine näherungsweise neutralen Reibwertverlauf über der Schlupfdrehzahl zu erreichen.

Weitere Einzelheiten der Doppelkupplung 12 gemäß dem beschriebenen Beispiel sind für den Fachmann ohne weiteres aus Fig. 1 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Es sollte noch betreffend die Ausbildung der Außenlamellen der ersten Lamellen-Kupplungsanordnung 64 als Belag-tragende Lamellen erwähnt werden, dass in Verbindung mit der Zuordnung der Außenlamellen zur Eingangsseite der Kupplungseinrichtung eine bessere Durchflutung des Lamellenpakets 76 erreicht wird, wenn die Reibbeläge - wie herkömmlich regelmäßig üblich - mit Reibbelagnuten oder anderen Fluiddurchgängen ausgebildet sind, die eine Durchströmung des Lamellenpakets auch im Zustand des Reibeingriffs ermöglichen. Da die Eingangsseite sich auch bei ausgekuppelter Kupplungsanordnung mit der Antriebseinheit bzw. dem Koppelende 16 bei laufender Antriebseinheit mitdreht, kommt es aufgrund der umlaufenden Reibbelagnuten bzw. der umlaufenden Fluiddurchgänge zu einer Art Förderwirkung mit entsprechender besserer Durchflutung des Lamellenpakets. In Abweichung von der Darstellung in Fig. 1 könnte man auch die zweite Lamellen-Kupplungsanordnung dementsprechend ausbilden, also die Außenlamellen als Reibbelag-tragende Lamellen ausbilden.

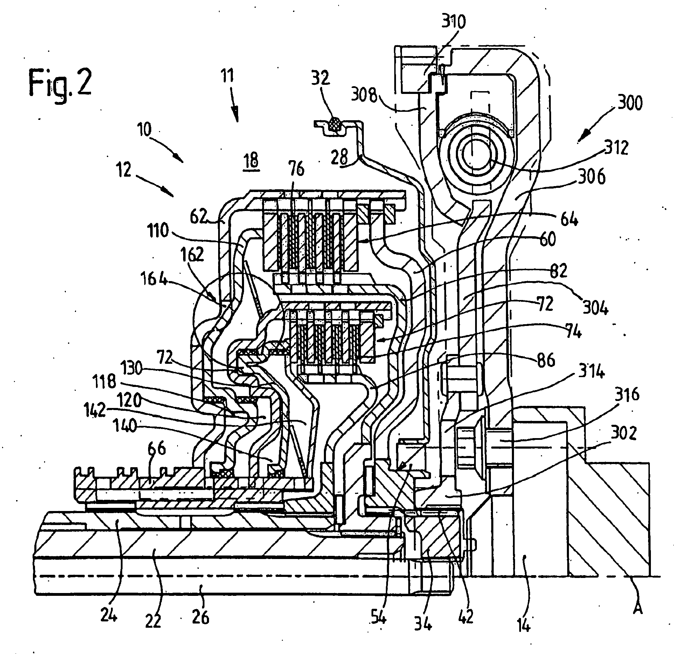

Im Folgenden werden weitere Beispiele von Mehrfach-Kupplungseinrichtungen, speziell Doppel-Kupplungseinrichtungen, hinsichtlich verschiedener Aspekte erläutert. Da die Ausführungsbeispiele der Fig. 2 bis 14 im grundlegenden Aufbau der Doppelkupplung selbst dem Ausführungsbeispiel der Fig. 1 entsprechen und die Darstellungen der Figuren dem Fachmann auf Grundlage der vorangehenden detaillierten Erläuterung des Ausführungsbeispiels der Fig. 1 unmittelbar verständlich sind, kann darauf verzichtet werden, die folgenden Ausführungsbeispiele in allen Einzelheiten zu erläutern. Es wird insoweit auf die vorangehende Erläuterung des Ausführungsbeispiels der Fig. 1 verwiesen.

Beim Beispiel der Fig. 2 sind der erste Außenlamellenträger 62 und der erste Betätigungskolben 110 im Hinblick auf die Kühlölabflussöffnungen 162 und 164 auf spezielle Weise ausgebildet, um einerseits im Bereich des Außenlamellenträgers 72 der zweiten (inneren) Lamellen-Kupplungsanordnung axialen Platz zu sparen und andererseits, wenn gewünscht, eine Verdrehsicherung gegen eine Verdrehung des ersten Betätigungskolbens 110 gegenüber dem Außenlamellenträger 62 vorzusehen. Hierzu sind der erste Außenlamellenträger 62 und der erste Betätigungskolben 110 in Umfangsrichtung abwechselnd partiell ausgenommen, so dass nicht ausgenommene Stellen des Betätigungskolbens 110 in ausgenommene Stellen des Außenlamellenträgers 62 und nicht ausgenommene Stellen des Außenlamellenträgers 62 in ausgenommene Stellen des Betätigungskolbens 110 eingreifen. Das Vorsehen der genannten Verdrehsicherung ist insoweit sinnvoll, als dass eine zusätzliche Belastung der zwischen dem Außenlamellenträger 62 und dem Betätigungskolben 110 wirkenden Dichtungen durch Mikrorotationen in Folge von Motorungleichförmigkeiten verhindert werden können. Für diese Verdrehsicherung müssen der Betätigungskolben 110 und der Außenlamellenträger 62 auch im eingerückten Zustand der ersten Lamellen-Kupplungsanordnung 64 ineinander greifen, was sonst nicht erforderlich wäre.

Bei den Beispielen der Fig. 1 und 2 ist die Kupplungseinrichtung über die Kupplungsnabe 34 an der Antriebseinheit des Antriebsstrangs angekoppelt, und zwar vorzugsweise über einen Torsionsschwingungsdämpfer, wie in Fig. 2 als Beispiel gezeigt ist.

Die in Fig. 2 gezeigte Kombination aus einer Doppelkupplung 12 und einem Torsionsschwingungsdämpfer 300 zeichnet sich durch eine einfache Montage in einem Antriebsstrang aus. Das von der Doppelkupplung und dem Torsionsschwingungsdämpfer gebildete Antriebssystem 11 lässt sich also einfach in einen Antriebsstrang zwischen der jeweiligen Antriebseinheit (Motor) und dem Getriebe eingliedern. Hierzu trägt insbesondere bei, dass die Doppelkupplung 12 und der Torsionsschwingungsdämpfer 300 unabhängig voneinander am Getriebe (die Doppelkupplung) und an der Antriebseinheit (der Torsionsschwingungsdämpfer) montiert werden können, und dann das Getriebe und die Antriebseinheit samt der daran angebrachten Teilsysteme (Doppelkupplung bzw. Torsionsschwingungsdämpfer) auf einfache Weise zusammengefügt werden können unter Verkoppelung des Torsionsschwingungsdämpfers mit der Eingangsseite (hier der Kupplungsnabe 34), und zwar vermittels der Außenverzahnung 42 der Kupplungsnabe und einer zugeordneten Innenverzahnung eines Nabenteils 302 der von einem Scheibenteil 304 gebildeten Sekundärseite des Torsionsschwingungsdämpfers 300.

Um die Montage des Torsionsschwingungsdämpfers 300 an der Kurbelwelle zu erleichtern, weist das Scheibenteil 304 Werkzeug-Durchtrittsöffnungen 314 auf, durch die mittels eines entsprechenden Werkzeugs Schraubbolzen 316 festgezogen werden können, die das erste Deckblech 306 an der Kurbelwelle bzw. dem Koppelende der Kurbelwelle befestigen.

Die Primärseite des Torsionsschwingungsdämpfers 300 ist von einem an der Kurbelwelle angebrachten ersten Deckblech 306 und einem daran angebrachten zweiten Deckblech 308 gebildet, das einen Anlasserzahnkranz 310 aufweist, über den mittels eines nicht dargestellten Anlassers im Falle einer als Brennkraftmaschine ausgebildeten Antriebseinheit diese gestartet werden kann. Eine Dämpferelementenanordnung 312 des Torsionsschwingungsdämpfers 300 ist auf an sich bekannte Weise in Aussparungen des Scheibenteils 304 zwischen den beiden Deckblechen 306 und 308 aufgenommen, wobei die Deckbleche zwischen in Umfangsrichtung benachbarte Dämpferelemente eingreifende Einbuchtungen, Abstützteile oder dergleichen aufweisen, so dass insgesamt für eine primärseitige und sekundärseitige Abstützung der Dämpferelementenanordnung in Umfangsrichtung gesorgt ist. Die Dämpferelemente können unter Vermittlung von Federtellern, Gleitschuhen und dergleichen abgestützt und geführt sein.

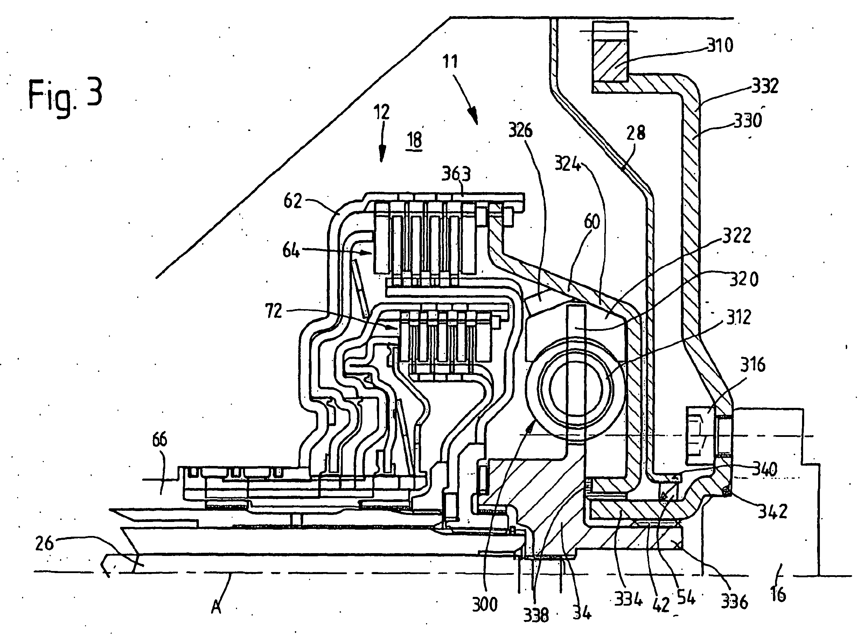

Weitere Beispiele von Antriebssystemen 11, umfassend eine Mehrfach-Kupplungseinrichtung, speziell eine Doppel-Kupplungseinrichtung und eine Torsionsschwingungsdämpferanordnung sowie ggf. eine beispielsweise von einem Kurbelwellenstartergenerator gebildete Elektromaschine werden anhand der Fig. 3 bis 17 erläutert.

Bei der Beschreibung der Ausführungsbeispiele der Fig. 3 bis 17 werden Ausführungen zu der jeweiligen Doppelkupplung 12 nur noch insoweit gemacht, als Änderungen gegenüber den vorangehend beschriebenen Ausführungsbeispielen zu erläutern sind. Die Doppelkupplungen 12 entsprechen hinsichtlich ihres inneren Aufbaus und ihrer Funktionsweise im Wesentlichen dem Beispiel der Fig. 1, so dass auf eine Eintragung von Bezugszeichen für die verschiedenen Komponenten verzichtet werden kann. Der Einfachheit halber wird auch darauf verzichtet, alle an sich in einer Schnittdarstellung gezeigten Bauteile in den Figuren schraffiert darzustellen. Der Fachmann wird aus einem einfachen Vergleich der betreffenden Figur mit der Fig. 1 sofort erkennen, welche Bauteile in einer Schnittansicht dargestellt sind. Der Fachmann wird auch kleinere Unterschiede in der Detailausführung der Doppelkupplungen aus den Figuren erkennen.

Beim Antriebssystem 11 der Fig. 3 ist der Torsionsschwingungsdämpfer 300 in die Doppelkupplung integriert. Hierzu weist die Kupplungsnabe 34 Radialstege 320 auf, zwischen die die ineinander geschachtelten Dämpferelemente (Dämpferfedern) der Dämpferelementenanordnung 312 aufgenommen sind. Die Kupplungsnabe 34 dient als Primärseite des Torsionsschwingungsdämpfers 300.

Als Sekundärseite des Torsionsschwingungsdämpfers 300 dient beim Antriebssystem 11 der Fig. 3 das bei den vorstehenden Ausführungsbeispielen als "Trägerblech" bezeichnete Momentenübertragungsglied 60, das Einbuchtungen oder herausgedrückte Zungen oder sonstige Abstützelemente aufweist, an denen die Dämpferelementenanordnung 312 sekundärseitig in Umfangsrichtung abgestützt ist. Die Dämpferelemente der Dämpferelementenanordnung 312 sind unter Vermittlung einer Gleitelementanordnung 322 (beispielsweise umfassend an sich bekannte Gleitschuhe, Federteller oder sonstige Gleit- und Führungselemente) an schräg in radialer und axialer Richtung verlaufenden Abschnitten 324 des Momentenübertragungsblechs 60 geführt, zwischen denen im Blech 60 definierte Führungszungen 326 derart aus dem Blech herausgedrückt sind, dass eine in einer Querschnittsansicht gemäß der Figur dachförmige Führungsanordnung geschaffen ist, die nicht nur in Umfangsrichtung, sondern auch in axialer Richtung für Führung und Haltung sorgt.

Das Antriebssystem 11 weist eine Koppelanordnung auf, die zur Ankopplung der Doppelkupplung 12 an der Antriebseinheit, speziell am Koppelende 16 der Kurbelwelle dient. Die Koppelanordnung 320 ist von einer sogenannten Flexplatte (flexplate) 332 gebildet, die radial außen einen Anlasserzahnkranz 310 trägt, der als primärseitige Zusatzmasse in Bezug auf den Torsionsschwingungsdämpfer 300 wirkt. Die Flexplatte 332 ist radial innen mit einem sich in axialer Richtung erstreckenden Koppelflansch 334 ausgeführt, der eine Innenverzahnung zur Kopplung mit der Außenverzahnung 42 der Kupplungsnabe 34 aufweist. Die Außenverzahnung 42 ist beim gezeigten Ausführungsbeispiel an einem axialen Koppelflansch 336 der Kupplungsnabe 34 vorgesehen. Der stationäre Deckel 28 ist mittels einer Drehlageranordnung 54, die vorzugsweise auch Dichtungsfunktion erfüllt, am Koppelflansch 334 der Koppelanordnung 330 gelagert.

Da das Momentenübertragungsblech 60 der Sekundärseite und die Kupplungsnabe 34 der Primärseite des Torsionsschwingungsdämpfers 300 zugeordnet sind, kommt es zu Relativverdrehungen innerhalb eines vom Torsionsschwingungsdämpfer zugelassenen Drehwinkels zwischen der Kupplungsnabe 34 einerseits und dem Momentenübertragungsblech 60 andererseits. Das an dem ersten Außenlamellenträger 62 drehfest und in beide axiale Richtungen abgestützt angebrachte Momentenübertragungsblech 60 ist radial innen am Koppelflansch 334 der Koppelanordnung 330 gelagert, und zwar unter Vermittlung eines vorzugsweise auch Dichtungsfunktionen erfüllenden Gleitrings 338, der einen axialen Schenkelabschnitt zwischen einem axialen Randflansch 340 des Momentenübertragungsblechs 60 und dem Koppelflansch 334 sowie einen radialen Schenkel zwischen dem Randflansch 340 und der Kupplungsnabe 34 aufweist. Unter Vermittlung des letzteren Schenkels des Gleitrings 338 ist die Kupplungsnabe 34 in axialer Richtung hin zur Antriebseinheit am Momentenübertragungsglied 60 abgestützt, und die vom Momentenübertragungsglied 60 aufgenommenen Axialkräfte werden vom Außenlamellenträger 62 aufgenommen und über das Ringteil 66 abgeleitet, so dass sich insgesamt ein geschlossener Kraftfluss ergibt und dementsprechend weder die Antriebseinheit mit ihrer Kurbelwelle noch das Getriebe mit seinen Getriebeeingangswellen Kräfte aufbringen bzw. aufnehmen muss, um die Doppelkupplung 12 als Einheit axial zusammen zu halten.

Zur Abdichtung der Kühlöl der Doppelkupplung zu führenden Bereiche in Richtung zur Antriebseinheit hin ist beim Ausführungsbeispiel der Fig. 3 ein Dichtring 342 zwischen dem Koppelende 16 der Kurbelwelle und der Flexplatte 332 vorgesehen, der zusammen mit der beispielsweise als Radialwellendichtring ausgeführten Dichtungs- und Drehlageranordnung 54 sowie ggf. aufgrund einer etwaigen Dichtungsfunktion des Gleitrings 338 den Radial- und Axialbereich radial innerhalb der Koppelflansch 334, 336 und axial zwischen der Kupplungsnabe 34 und dem Koppelende 16 nach radial außen abdichtet.

Es sollte noch erwähnt werden, dass zur Erhöhung des Massenträgheitsmoments der Kurbelwelle zusätzlich zum Zahnkranz 310 noch eine Zusatzmassenanordnung an der Flexplatte vorgesehen sein könnte.

Beim Beispiel der Fig. 3 ist folgendes Konzept verwirklicht. Die Flexplatte 330 trägt den Zahnkranz 310 sowie ggf. eine Zusatzmassenanordnung. Sie bildet ferner eine Lauffläche für die das Drehlager 54, ggf. den Radialwellendichtering 54 und dient zur Herstellung der Antriebsverbindung zwischen der Eingangsseite (Kupplungsnabe 34) der Doppelkupplung und der Kurbelwelle, wobei die Eingangsseite der Doppelkupplung gleichzeitig die Primärseite des Torsionsschwingungsdämpfers 300 ist. Die Kupplungsnabe 34 nimmt im Falle der Regel-Momentenflussrichtung von der Antriebseinheit zum Getriebe das Drehmoment von der Flexplatte 330 ab und bildet den Antrieb für den Torsionsschwingungsdämpfer 300 und die Pumpenwelle 26. Das der Sekundärseite des Torsionsschwingungsdämpfers zugeordnete Momentenübertragungsblech 60, das zusammen mit dem Außenlamellenträger 62 eventuell auch als Kupplungsgehäuse aufgefasst werden könnte, ist radial auf der Flexplatte gelagert und stützt die Kupplungssnabe 34 axial ab. Der Außenlamellenträger 62 ist ebenso wie die übrigen Lamellenträger mit Durchflussöffnungen für Kühlmittel (Kühlöl) ausgeführt, so dass das den Lamellen zugeführte Kühlmittel nach radial außen in den von der Getriebegehäuseglocke 18 gebildeten Aufnahmeraum abfließen kann, in den die Doppelkupplung eingebaut ist. Der etwa auf gleicher radialer Höhe wie die zweite, radial innen liegende Lamellen-Kupplungsanordnung angeordnete Torsionsschwingungsdämpfer 300 ist in das von dem Momentenübertragungsglied 60 und dem Außenlamellenträger 62 gebildete "Kupplungsgehäuse" aufgenommen, also gewissermaßen innerhalb eines "inneren Nassraums" der Doppelkupplung angeordnet, dem im Betrieb Kühlmittel (insbesondere Kühlöl) zugeführt wird, so dass dementsprechend auch der Torsionsschwingungsdämpfer 300 gut mit Kühlmittel versorgt wird, um diesen zu kühlen oder/und zu schmieren. Gemäß der hier gewählten Nomenklatur könnte der radial außerhalb des Außenlamellenträgers 62 und des Momentenübertragungsglieds 60 liegende Teil des von der Glocke 18 begrenzten Aufnahmeraums als "äußerer Nassraum" bezeichnet werden, in den die Doppelkupplung das Kühlmittel abgibt. Wäre der Torsionsschwingungsdämpfer in diesem "äußeren Nassraum" angeordnet, so könnte ohne gesonderte Maßnahmen dem Torsionsschwingungsdämpfer nicht ohne Weiteres in hinreichender Menge Kühlmittel zugeführt werden.

Die Montage der Antriebseinheit 11 kann beispielsweise in der Weise erfolgen, dass zuerst die Flexplatte 330 samt dem Zahnkranz 310 und dem O-Ring 342 am Motor montiert wird, und dass dann der Deckel bzw. das Dichtblech 28 samt dem Radialwellendichtring 54 montiert werden. Unabhängig hiervon kann die Doppelkupplung 12 samt darin integriertem Torsionsschwingungsdämpfer 300 als vormontierte Einheit am Getriebe montiert werden. Sind sowohl die Flexplatte 330 als auch die Doppelkupplung 12 montiert, können das Getriebe und der Motor zusammengefügt werden einschließlich der Herstellung der Drehlager- und Abdichtverbindung zwischen dem Deckel 28 und dem Koppelflansch 334 unter Vermittlung des Radialwellendichtrings 54 und der Herstellung der Drehmitnahmeverbindung über die Verzahnungen zwischen den beiden Koppelflanschen 334 und 336.

Erwähnt werden sollte noch, dass beim Beispiel der Fig. 3 die Ölpumpe und der Torsionsschwingungsdämpfer parallel geschaltet sind, so dass der Momentenfluss von der Antriebseinheit zur Ölpumpe nicht über den Torsionsschwingungsdämpfer verläuft, im Gegensatz zum Ausführungsbeispiel der Fig. 2, bei dem der Torsionsschwingungsdämpfer 300 und die Ölpumpe in Reihe geschaltet sind.

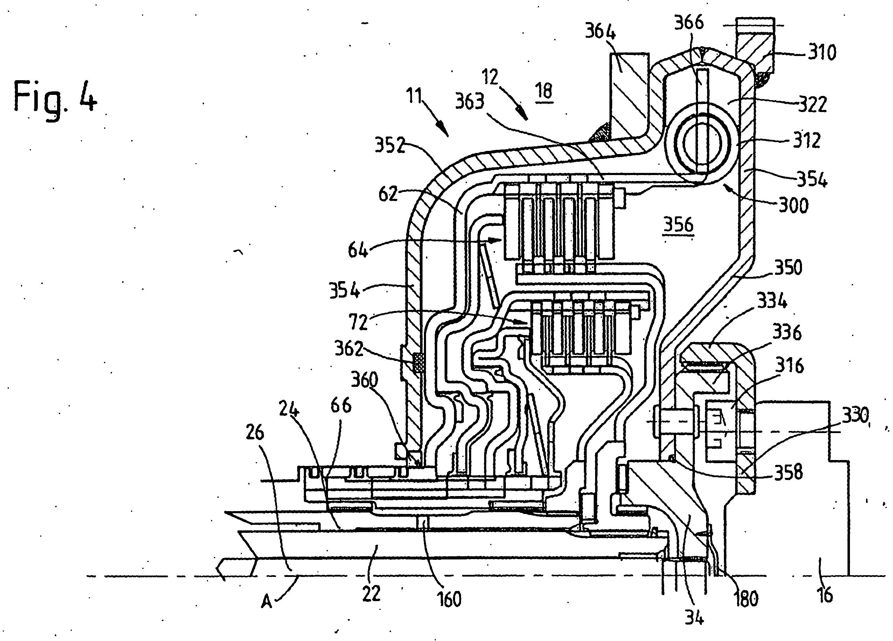

Ein anderes Ausführungsbeispiel einer Doppelkupplung 12 mit darin integriertem Torsionsschwingungsdämpfer 300 ist in Fig. 4 gezeigt. Bei diesem Ausführungsbeispiel weist die Doppelkupplung 12 eine im Wesentlichen aus zwei Halbschalenteilen 350, 352 bestehende Wandung 354 auf, die drehfest an der Kupplungsnabe 34 festgelegt ist und sich dementsprechend mit der Eingangsseite der Doppelkupplung 12 mitdreht bzw. der Eingangsseite zuzurechnen ist. Die Wandung 354 schließt einen Nassraum 356 der Doppelkupplung 12 ein, in dem neben den Lamellen-Kupplungsanordnungen 64 und 72 auch der Torsionsschwingungsdämpfer 300 enthalten ist. Der vorzugsweise zumindest im Betrieb eine Vollfüllung an Kühlmittel, insbesondere Kühlöl, aufnehmende Nassraum 356 ist nach außen durch einen O-Ring 358 und eine Dichtungs- und Drehlageranordnung 360, beispielsweise ein Radialwellendichtring, abgedichtet. Die das getriebeseitige Ende der Punpenwelle 26 aufnehmende, eine mit einer Außenverzahnung des Wellenendes in Drehmitnahmeeingriff stehende Innenverzahnung aufweisende Durchgangsöffnung der Kupplungsnabe 34 ist beim Ausführungsbeispiel der Fig. 4 durch ein an der Nabe 34 angeschweißtes Dichtblech 180 öldicht verschlossen, das insoweit dem Element 180 der Fig. 1 entspricht.

Die Kupplungsnabe 34 ist über die daran beispielsweise festgenietete Halbschale 350 und die daran festgeschweißte Halbschale 352 unter Vermittlung eines Gleitrings 362 am Außenlamellenträger 62 axial in Richtung zur Antriebseinheit abgestützt. Es resultiert wiederum der die Doppelkupplung axial zusammenhaltende geschlossene Kraftfluss. Radial außen an der Halbschale 350 ist ein Anlasserzahnkranz 310 angeschweißt. An der Halbschale 352 ist radial außen ein Zusatzmassenring 364 angeschweißt. Der Anlasserzahnkranz 310 und der Zusatzmassenring 364 erhöhen für den Torsionsschwingungsdämpfer 300 die primärseitige Trägheitsmasse.

Beim Ausführungsbeispiel der Fig. 4 wirkt der Torsionsschwingungsdämpfer 300 zwischen der Wandung 354 und dem ersten Außenlamellenträger 62, wobei die Wandung 354 der Primärseite und der Außenlamellenträger 62 der Sekundärseite des Torsionsschwingungsdämpfers 300 zugeordnet ist. Hierzu bilden die beiden Halbschalen 350 und 352 einen ringförmigen Führungskanal, in dem eine die Dämpferelementenanordnung 312 führende Gleitelementanordnung 322 oder dergleichen aufgenommen ist. Die Dämpferelemente sind zwischen zur Kraftabstützung dienenden Wandungseinbuchtungen und vom Lamellentragabschnitt 363 des Außenlamellenträgers 62 nach radial außen vorstehenden Abstützstegen 366 aufgenommen. Im Betrieb kommt es zu Relativverdrehungen zwischen der Wandung 354 und dem Außenlamellenträger 62 innerhalb des vom Torsionsschwingungsdämpfer 300 zugelassenen Drehwinkels. Diese Relativ-Drehbewegungen werden in einem gewissen Maße durch Reibung am Gleitring 362 gedämpft.

Die Kupplungsnabe 34 weist einen (radial außerhalb der Kurbelwellenschrauben 316 liegenden) Koppelflansch 336 mit einer Außenverzahnung auf, die mit einer Innenverzahnung eines Koppelflansches 334 eines durch die Schraubbolzen (Kurbelwellenschrauben) 316 am Koppelende 16 angebrachten Koppelteils 330 in Drehmitnahmeeingriff steht. Die Verzahnungen sind als Steckverzahnungen ausgeführt, die durch axiale Relativbewegung in gegenseitigen Eingriff bzw. außer Eingriff bringbar sind. Etwaige Taumelbewegungen werden vor allem durch das Koppelteil 330 und in gewissem Maße durch den Flansch 336 der Kupplungsnabe 34 aufgenommen, so dass zum einen das Koppelende 16 bzw. die Kurbelwelle nicht durch Taumelbewegungen und dergleichen belastet wird, insoweit also keine Bruchgefahr besteht, und zum anderen auch die Doppelkupplung und insbesondere deren Torsionsschwingungsdämpfer 300 im Wesentlichen von Taumelbewegungen und Taumelkräften freigehalten wird. Die Taumelbelastung tritt im Wesentlichen nur im Bereich der Steckverzahnung bzw. der Koppelflansche 334, 336 auf.

Der Nassraum 356 ist über zwischen dem Ringteil 66, der Getriebeeingangswelle 24, der Getriebeeingangswelle 22 und der Ölpumpenantriebswelle 26 ausgebildete Ringkanäle an einer Kühlölversorgung angeschlossen, wobei beispielsweise (ähnlich wie beim Ausführungsbeispiel der Fig. 1) ein zwischen dem Ringteil 66 und der Getriebeeingangswelle 24 ausgebildeter erster Ölkanal und ein von diesem abzweigenden, zwischen der Getriebeeingangswelle 24 und der Getriebeeingangswelle 22 ausgebildeter zweiter Ölkanal zur Zufuhr von Kühlöl in den Nassraum 356 dienen und ein zwischen der Getriebeeingangswelle 22 und der Pumpenantriebswelle 26 ausgebildeter dritter Ölkanal zur Abfuhr von Kühlöl aus dem Nassraum 356 dient. Es kann so ein Kühlölkreislauf durch den Nassraum 356 aufrecht erhalten werden, der durch die Lamellen verläuft und so diese wirkungsvoll kühlt. Auch der Torsionsschwingungsdämpfer 300 wird auf diese Weise zuverlässig mit Kühlöl versorgt.

Die Wandung 354 ist hinsichtlich ihrer Formgestaltung gut an den von den verschiedenen Komponenten der Doppelkupplung 12 eingenommenen Raum angepasst, so dass der Nassraum 356 im Falle einer Vollfüllung ein vergleichsweise geringes Ölvolumen enthält und dementsprechend das diesem Ölvolumen zuzurechnende Trägheitsmomentvergleichsweise gering ist. Bei still stehendem Antriebsstrang bzw. Fahrzeug kann zugelassen sein, dass das Öl aus dem radial oberen Bereich des Nassraums 356 in Richtung zum Getriebe abläuft und bei Inbetriebnahme erst wieder mit Öl gefüllt wird.

Zum Ausführungsbeispiel der Fig. 4 ist noch auf Folgendes hinzuweisen. Der Radialwellendichtring 360 läuft nicht mit der Motordrehzahl um, sondern wird nur entsprechend den Relativverdrehungen zwischen der Wandung 254 und dem Außenlamellenträger 62 samt dem Ringteil 66 auf Reibung belastet. Der Torsionsschwingungsdämpfer liegt radial außerhalb der Lamellen der ersten Lamellen-Kupplungsanordnung 64, wobei - wie aus dem Vorangehenden schon klar geworden ist - die Torsionsdämpferkammer von einem Abschnitt des Nassraums der Doppelkupplung gebildet ist. Das primärseitige Trägheitsmoment wird durch radial außen an der Wandung 354 angebrachte Zusatzmassen (Zahnkranz 210 und Massenring 364) erhöht, beispielsweise im Hinblick auf eine Absenkung der Eigenfrequenz des Systems. Zur Verkopplung der Eingangsseite der Doppelkupplung und der Kurbelwelle sind Steckverzahnungen vorgesehen, die radial außerhalb der Kurbelwellenschrauben 316 angeordnet sind, so dass kleinere Zahnkräfte auftreten und die Außenverzahnung am Flansch 336 der Kupplungsnabe 34 leichter herstellbar ist. Durch die axiale Abstützung der Kupplungsnabe 34 über die Wandung 354 am Außenlamellenträger 62 wird ein geschlossener Kraftfluss erreicht, wobei die Abstützung (Gleitring 362) vorzugsweise möglichst weit radial innen liegt, um nennenswerte Kippmomente zu vermeiden.

Die Montage kann beispielsweise auf folgende Weise erfolgen: Es wird das auch als Montageflansch bezeichenbare Koppelelement 330 an dem Koppelende 16 der Kurbelwelle angebracht. Die Doppelkupplung 12 mit dem darin integrierten Torsionsschwingungsdämpfer 300 wird als vormontierte Einheit am Getriebe montiert. Es werden dann das Getriebe und der Motor zusammengefügt unter Herstellung der Drehmitnahmeverbindung an den Verzahnungen der Koppelflansche 334, 336.

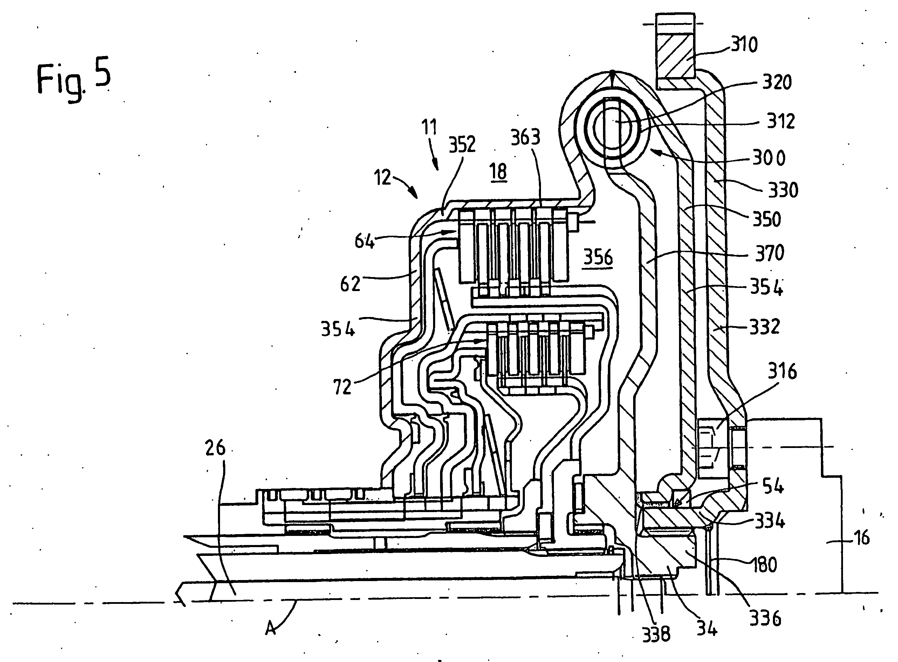

Das Ausführungsbeispiel der Fig. 5 entspricht betreffend die Integration des Torsionsschwingungsdämpfers 300 in die Doppelkupplung 12 in mancher Hinsicht dem Ausführungsbeispiel der Fig. 3. So ist die Dämpferelementenanordnung 312, die wiederum von radial geschachtelten Dämpfungselementen, insbesondere Druckfedern, gebildet ist, einerseits an Radialstegen 320 einer mit der Kupplungsnabe 34 einteiligen (oder alternativ drehfest daran angebrachten) Koppelscheibe 370 und andererseits über ein Momentenübertragungsglied am Außenlamellenträger 62 abgestützt. Als zu dem Momentenübertragungsglied 60 der Fig. 3 korrespondierendes Bauteil dient eine antriebseinheitsseitige Halbschale 350, die mit einer den Außenlamellenträger 62 bildenden Halbschale 352 verbunden ist, um eine den Nassraum 356 begrenzende Wandung 354 zu bilden. Die Halbschale 350 ist wie das Element 60 der Fig. 3 vermittels eines Gleitrings 338 an der Kupplungsnabe 34 axial abgestützt und am Koppelflansch 334 der die Koppelanordnung 330 bildenden Flexplatte 332 radial geführt. Da die Wandung 354 gewissermaßen die Funktion des Deckels 28 mit übernimmt, ist zur Abdichtung ein Radialwellenring 54 zwischen dem radial inneren Randbereich der Halbschale 350 und dem Außenumfang des Koppelflansches 334 wirksam. Eine am Koppelflansch 334 angeschweißte Dichtscheibe 180 sorgt für eine Abdichtung des Ölrücklaufwegs in Richtung zur Antriebseinheit hin.

Wie beim Ausführungsbeispiel der Fig. 4 ermöglicht die Konstruktion der Fig. 5 eine Vollfüllung des Nassraums 356 mit Kühlmittel, insbesondere Kühlöl. Der Außenlamellenträger 62 ist dementsprechend ohne Öldurchlassöffnungen nach radial außen hin ausgeführt. Statt dessen ist im Bereich des Halteabschnitts 363 dafür gesorgt, dass Kühlöl in hinreichender Menge radial außerhalb der Lamellen in axialer Richtung abfließen kann. Wie beim Ausführungsbeispiel der Fig. 4 ist die die Dämpferelementenanordnung 312 aufnehmende Torsionsdämpferkammer von einem Abschnitt des Nassraums 356 gebildet. Die Dämpferelementenanordnung ist radial außerhalb der Lamellen der ersten Lamellen-Kupplungsanordnung 64 angeordnet, so dass Dämpferelemente mit in Umfangsrichtung vergleichsweise großer Länge eingesetzt werden können. Hinsichtlich der Koppelanordnung 330 gilt das zum Ausführungsbeispiel der Fig. 3 Gesagte.

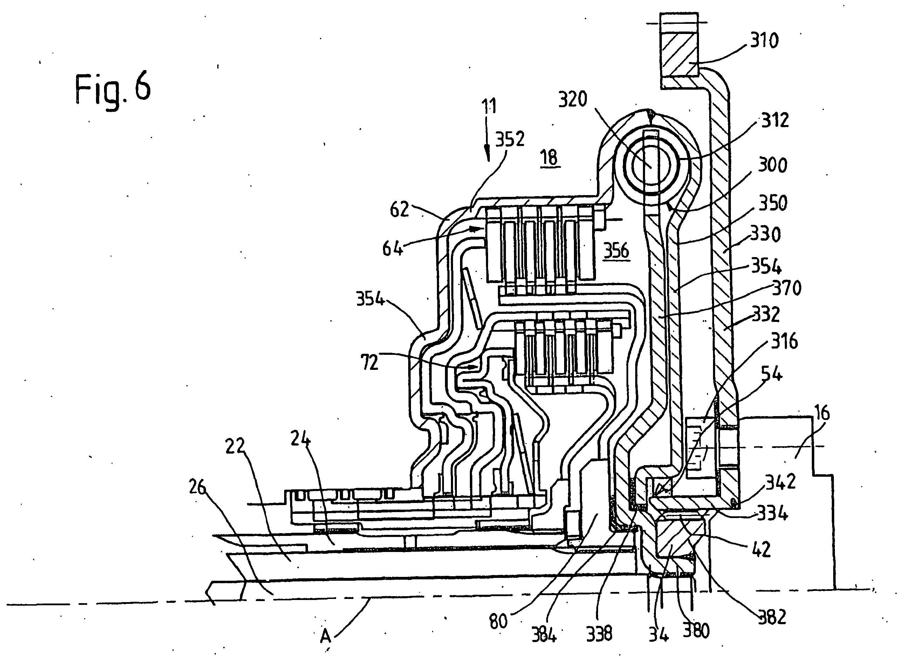

Das Ausführungsbeispiel in Fig. 6 entspricht im Wesentlichen dem Ausführungsbeispiel der Fig. 5. Ein wichtiger Unterschied liegt darin, dass die Kupplungsnabe 34 beim Ausführungsbeispiel der Fig. 6 zweiteilig ausgeführt ist und von einem L-Flanschabschnitt 380 eines die Primärseite des Torsionsschwingungsdämpfers 300 bildenden Koppelscheibenteils 370 und einem daran angeschweißten Ringteil 382 gebildet ist, das die Außenverzahnung 42 aufweist. Der radial innere Bereich des Halbschalenteils 350 ist etwas anders ausgestaltet als beim Ausführungsbeispiel der Fig. 5, aber wie dort über einen Radialwellenring 54 am Koppelflansch 334 der Flexplatte 352 abdichtend geführt und mittels eines Gleitrings 338 an der Primärseite des Torsionsschwingungsdämpfers 300 axial abgestützt. Ein weiterer Gleitring 384 stützt die Koppelscheibe 370 axial am Nabenteil 80 ab, wobei der Gleitring 384 ggf. Radialnuten aufweist, um Kühlöl aus dem Nassraum 356 in Richtung zum zwischen der Pumpenantriebswelle 26 und der Getriebeeingangswelle 22 ausgebildeten Rückfluss-Ringkanal abfließen zu lassen.

Die zweiteilige Ausbildung der Kupplungsnabe 34 gemäß dem Ausführungsbeispiel der Fig. 6 ist gegenüber der einteiligen Ausführung gemäß Fig. 5 herstellungstechnisch vorteilhaft.

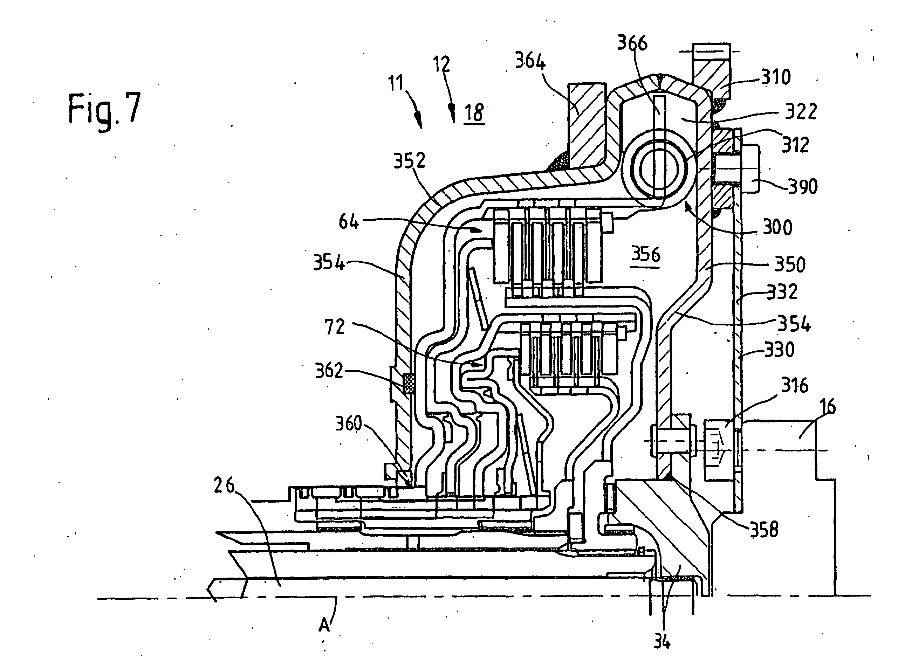

Das Ausführungsbeispiel der Fig. 7 entspricht im Wesentlichen dem Ausführungsbeispiel der Fig. 4. Ein Unterschied liegt darin, dass die Kupplungsnabe 34 mit zur Antriebseinheit hin geschlossener Sackbohrung für das Koppelende der Pumpenantriebswelle 26 ausgeführt ist, so dass auf das Dichtblech 180 verzichtet werden kann. Die Kopplung zwischen dem Koppelende 16 der Kurbelwelle und der Doppelkupplung 12 erfolgt beim Ausführungsbeispiel der Fig. 7 unter Vermittlung einer von einer Flexplatte 332 gebildeten Koppelanordnung 330, die mittels Schrauben 390 im Radialbereich der Dämpferelementenanordnung 312, also radial außerhalb der Lamellen der ersten Lamellen-Kupplungsanordnung 64 an der Wandung 354 angebunden ist. Gegenüber der Verbindung zwischen der Antriebseinheit und der Doppelkupplung über Steckverzahnungen bietet die bei der Konstruktion der Fig. 7 realisierte Verkopplung den Vorteil, dass Taumelbewegungen besonders wirkungsvoll aufgenommen werden können, ohne dass die verkoppelten Bauteile stark durch Taumelbewegungen belastet w[Berden. Durch die Flexplatte 332 wird also eine optimierte Taumelentkopplung der Antriebseinheit von der Doppelkupplung erreicht. Die Flexplatte kann in Abweichung von dem in Fig. 7 gezeigten Ausführungsbeispiel auch Abdichtungsfunktion für den Nassraum 356 und die Ölkanäle nach außen hin übernehmen und beispielsweise in die Wandung 354 direkt einbezogen sein.

Betreffend die Ausführungsbeispiele der Fig. 4 bis 7 ist noch zu betonen, dass die sich mit der Eingangsseite bzw. dem Außenlamellenträger mitdrehende Wandung 354 jeweils ein geschlossenes Gehäuse der Doppelkupplung 12 bildet und deshalb auch als Gehäuse 354 angesprochen werden kann. Grundsätzlich ist es denkbar, dass eine sich mit einer Komponente bzw. Komponenten der Doppelkupplung mitdrehende Wandung vorgesehen ist, die für sich alleine kein abgeschlossenes Gehäuse bildet, sondern zusammen mit einer stationären Wandung einen Nassraum begrenzt. Da eine zur Abdichtung des Nassraums zwischen der sich mitdrehenden Wandung und der stationären Wandung regelmäßig erforderliche Dichtungsanordnung oder dergleichen vergleichsweise stark auf Reibung belastet wird, ist es bevorzugt, die Doppelkupplung mit einem geschlossenen, sich mitdrehenden Gehäuse auszuführen, das den Nassraum 356 begrenzt.

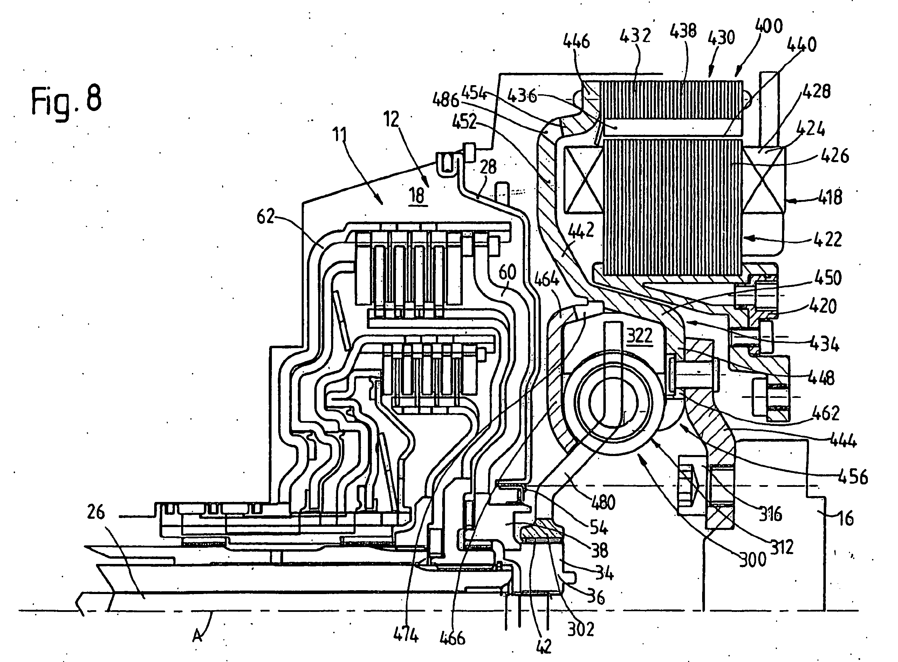

Ein weiteres Antriebssystem ist in Fig. 8 gezeigt. Die Doppelkupplung entspricht im Wesentlichen der Doppelkupplung der Fig. 1 und ist mit einer zweiteiligen, die Teile 36 und 38 aufweisenden Kupplungsnabe 34 ausgeführt.

Das Antriebssystem 11 umfasst neben der Doppelkupplung 12 ferner einen Torsionsschwingungsdämpfer 300 und eine allgemein mit 400 bezeichnete Elektromaschine, beispielsweise ein sogenannter Kurbelwellenstartergenerator. Die Elektromaschine 400 weist eine Statoranordnung 418 auf, die beispielsweise auf einem Statorträger 420 an einem nicht dargestellten Motorblock oder dergleichen getragen sein kann. Die Statoranordnung 418 umfasst einen Statorwechselwirkungsbereich 422 mit einer Mehrzahl von Statorwicklungen 424 und ein Joch bildenden Blechpaketen 426. Die Wicklungsköpfe 428 der Wicklungen 24 stehen seitlich über die Blechpakete 26 über. Die Elektromaschine 400 umfasst ferner eine Rotoranordnung 430 mit einem Rotorwechselwirkungsbereich 432 und einer nachfolgend noch detaillierter beschriebenen Trägeranordnung 434. Der Rotorwechselwirkungsbereich 432 umfasst eine Mehrzahl von an dessen Innenseite getragenen Permanentmagneten 436 sowie Blechpakete 438, die ein Joch des Rotorwechselwirkungsbereichs 432 bilden. Zwischen den Permanentmagneten 36 und dem Statorwechselwirkungsbereich 422 ist ein Luftspalt 440 gebildet, der zum Erhalt einer bestmöglichen Effizienz der Elektromaschine 400 so klein als möglich sein sollte.

Die Trägeranordnung 434 umfasst zwei Trägerelemente 442, 444. Das erste Trägerelement 442, das radial außen mit einem im Wesentlichen sich radial erstreckenden Abschnitt 446 den Rotorwechselwirkungsbereich 432 trägt, ist in einem radial weiter innen liegenden, sich ebenfalls im Wesentlichen radial erstreckenden Abschnitt 448 mit dem zweiten Trägerteil 444 durch eine Mehrzahl von in Umfangsrichtung aufeinander folgenden Nietbolzen oder dergleichen verbunden.

Radial außen anschließend an den sich im Wesentlichen radial erstreckenden Abschnitt 448 weist das erste Trägerelement 442 einen sich in Richtung der Drehachse A und geringfügig nach radial außen erstreckenden Verbindungsabschnitt 450 auf, welcher sich mit dem Statorwechselwirkungsbereich 422 in Achsrichtung überlappt bzw. diesen axial überbrückt. An diesen Verbindungsabschnitt 450 anschließend weist das erste Trägerelement 442 einen sich im Wesentlichen wieder nach radial außen erstreckenden Abschnitt 452 auf, der nach radial außen hin die Wicklungsköpfe 428 überbrückt und in einen sich im Wesentlichen in axialer Richtung erstreckenden, und die Wicklungsköpfe 28 zumindest teilweise in Axialrichtung überbrückenden Abschnitt 454 übergeht, an den sich der im Wesentlichen radial erstreckende Abschnitt 446 anschließt.

Als Primärseite 456 des Torsionsschwingungsdämpfers 300 dient der sich im Wesentlichen radial erstreckende Abschnitt 448 des ersten Trägerelements 442, der einen ersten Deckscheibenbereich 462 der Primärseite bildet. Ein zweiter Deckscheibenbereich 464 der Primärseite ist beispielsweise von einem gesonderten, beispielsweise aus Blech gestanzten und geeignet geformten Element gebildet, das einen sich im Wesentlichen radial erstreckenden Abschnitt 466 aufweist, der in Achsrichtung im Wesentlichen dem Abschnitt 448 des ersten Deckscheibenbereichs 462 gegenüberliegt. Der zweite Deckscheibenbereich 464 könnte grundsätzlich aber auch von in dem ersten Trägerelement 442 definierten und aus diesen entsprechend herausgedrückten Zungenabschnitten oder dergleichen gebildet sein. Handelt es sich um ein gesondertes Blechteil, kann dieses am ersten Trägerelement 442 angeschweißt sein. Auch eine formschlüssige Rastverbindung oder dergleichen ist denkbar.

Um Abrieb der Gleitelementanordnung 322 nach radial außen abgeben zu können, sind Partikelabgabeöffnungen 474 im Übergangsbereich zwischen dem zweiten Deckscheibenbereich 64 und dem Verbindungsabschnitt 450 sowie Partikelabgabeöffnungen 486 im Übergangsbereich zwischen den Abschnitten 452 und 454 vorgesehen.

Als Sekundärseite dient ein Zentralscheibenelement 480, das ein Nabenteil 302 aufweist, das mit einer Innenverzahnung ausgeführt ist, die in die Außenverzahnung 42 eingreift und so die Sekundärseite des Torsionsschwingungsdämpfers 300 an der Eingangsseite der Doppelkupplung 12 ankoppelt. Auf an sich bekannte Weise stützen sich die Dämpferelemente, beispielsweise Dämpferfedern, der Dämpferelementenanordnung 312 einerseits an der Primärseite, beispielsweise an an den Abschnitten 448, 464 und ggf. 450 gebildeten axialen bzw. radialen Ausbauchungen, und andererseits an der Sekundärseite, beispielsweise an Radialstegen des Zentralscheibenelements 480 ab, wobei Federteller als Abstützelemente zur besseren Druckverteilung vorgesehen sein können.

Zu näheren Einzelheiten der Ausbildung der Elektromaschine 400 und des Torsionsschwingungsdämpfers 300 wird auf die deutsche Patentanmeldung Az. 100 06 646.1 vom 15.02.2000 verwiesen.

Das Antriebssystem 11 der Fig. 8 zeichnet sich dadurch aus, dass eine Funktionsintegration für die Elektromaschine und den Torsionsschwingungsdämpfer 300 realisiert ist. Dadurch, dass das erste Trägerelement 442 wenigstens den ersten Deckscheibenbereich 462 der Primärseite bildet, wird die Teilevielfalt reduziert und Bauraum eingespart. Dabei wird eine optimale Raumausnutzung dadurch erreicht, dass der Torsionsschwingungsdämpfer 300 im Wesentlichen radial innerhalb der Statoranordnung 418 angeordnet ist. Die Rotoranordnung 430 bildet eine Primärmasse für den Torsionsschwingungsdämpfer 300, während das Zentralscheibenelement 480 samt den daran angekoppelten Komponenten der Doppelkupplung 12 gewissermaßen eine Sekundärmasse des Torsionsschwingungsdämpfers 300 bildet. Insbesondere der Außenlamellenträger 62 und die daran angeordneten Außenlamellen weisen eine nennenswerte sekundärseitige Trägheitsmasse auf.

Das Antriebssystem der Fig. 8 zeichnet sich, wie schon erwähnt, dadurch aus, dass es durch eine teilemäßige Verschmelzung der Elektromaschine 400 und des Torsionsschwingungsdämpfers 300 nur sehr wenig Bauraum beansprucht. Die Trägeranordnung 434 der Rotoranordnung 430 bildet einen der Kraftabstützung dienenden Bereich des Torsionsschwingungsdämpfers 300, so dass hier beispielsweise auf ein vollständiges separates Deckscheibenelement oder dergleichen verzichtet werden kann. Des Weiteren liegt insbesondere der Bereich 448, 450 der Trägeranordnung 434, welcher den Deckscheibenbereich 462 der Primärseite bildet, im Wesentlichen radial innerhalb der Statoranordnung 418 der als Außenläufermaschine ausgebildeten Elektromaschine 400. Durch die zusätzlich noch vorhandene zumindest teilweise axiale Überlappung der Elektromaschine 400, d. h. insbesondere der Statoranordnung 418 derselben, mit dem Torsionsschwingungsdämpfer 300 bzw. desses Dämpferelementenanordnung 312 wird der in Anspruch genommene Bauraum weiter minimiert.

Der Konstruktion der Fig. 8 liegt folgendes Grundkonzept zugrunde: Die Elektromaschine (Kurbelwellenstartergenerator) und der Torsionsschwingungsdämpfer 300 sind radial ineinander geschachtelt, während die Doppelkupplung axial benachbart dazu angeordnet ist. Der Außendurchmesser der Elektromaschine ist größer als der Außendurchmesser der Doppelkupplung 412, wodurch im Falle einer dem Normalfall entsprechenden kegelförmigen Getriebeglockenausbildung (motorseitig größerer Innendurchmesser, getriebeseitig kleinerer Innendurchmesser) eine optimale Bauraumausnutzung erreicht wird. Die Doppelkupplung liegt mit ihren Lamellen-Kupplungsanordnungen etwa im gleichen Radialbereich bzw. radial außerhalb des Torsionsschwingungsdämpfers.

Gemäß der gezeigten Konstruktion ist der Torsionsschwingungsdämpfer 300 für einen trocken laufenden Betrieb vorgesehen, er kann aber auch mit wenigstens einer Kammer für die Dämpferelementenanordnung ausgeführt sein, um einen nasslaufenden Betrieb ähnlich wie bei einem Zwei-Massen-Schwungrad zu ermöglichen.

Wie beim Beispiel der Fig. 2 sind die Ölpumpe und der Torsionsschwingungsdämpfer 300 in Reihe geschaltet, so dass nicht nur die Doppelkupplung 12, sondern auch die Ölpumpe schwingungsgedämpft über den Torsionsschwingungsdämpfer 300 angetrieben wird.

Die Montage erfolgt bevorzugt auf folgende Weise: Eine erste, von der Statoranordnung 418 und dem Statorträger 420 gebildete Einheit und eine zweite, von der Rotoranordnung 430 und der Trägeranordnung 434 und dem Torsionsschwingungsdämpfer 300 gebildete zweite Einheit werden jeweils als vormontierte Einheit an der Antriebseinheit montiert. Ebenso wird die Doppelkupplung 12 als vormontierte Einheit am Getriebe in der Getriebeglocke 18 montiert und der Deckel 28 unter Anordnung des Radialwellendichtrings 54 zwischen dem radial inneren Flansch des Deckels und der Kupplungsnabe 36 in Stellung gebracht. Danach werden das Getriebe und die Antriebseinheit zusammengefügt, wobei die Innenverzahnung des Nabenteils 302 der Sekundärseite und die Außenverzahnung 42 der Kupplungsnabe 34 in gegenseitigen Eingriff gebracht werden.

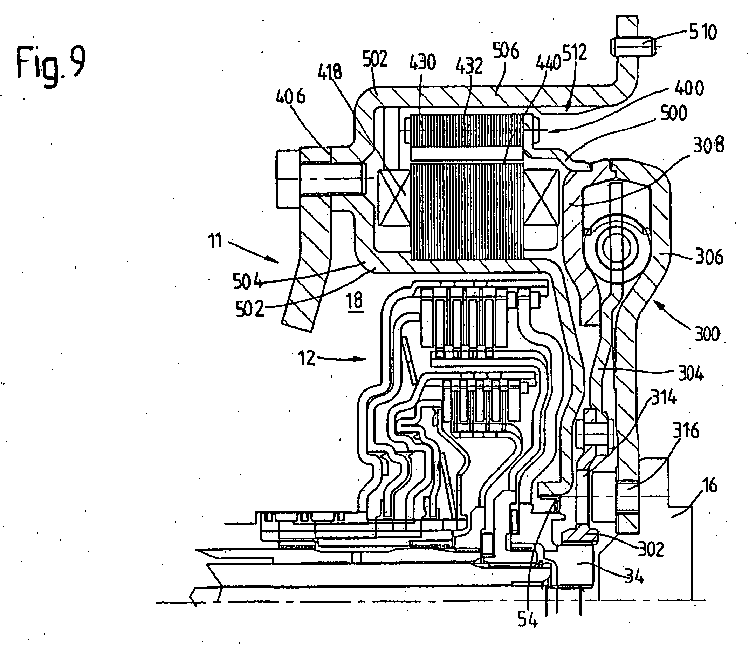

Das Antriebssystem 11 der Fig. 9 entspricht hinsichtlich der Doppelkupplung 12 und dem Torsionsschwingungsdämpfer 300 im Wesentlichen dem Ausführungsbeispiel der Fig. 2. Auf einen Anlasserzahnkranz 310 ist beim gezeigten Ausführungsbeispiel aber verzichtet. Statt dessen weist das Antriebssystem 11 eine beispielsweise als Kurbelwellenstatorgenerator dienende Elektromaschine 400 auf, deren Rotoranordnung 430 mittels einem Tragring oder Tragelementen 500 an der von den Deckblechen 306, 308 gebildeten Primärseite des Torsionsschwingungsdämpfers 300 gehalten ist. Ein am Getriebe angebrachter Statorträger 502, beispielsweise ein Guss- oder Ziehteil, trägt die radial außerhalb der Doppelkupplung 12 angeordnete Statoranordnung 418. Der Statorträger weist einen radial unteren Abschnitt 504 und einen radial oberen Abschnitt 506 auf, zwischen denen die Statoranordnung 418 und die Rotoranordnung 430 angeordnet sind. Der mit 406 bezeichnete Fügespalt zwischen dem Statorträger 502 und der Getriebegehäuseglocke ist abgedichtet. Ferner ist ein Radialwellendichtring 54 zwischen der Kupplungsnabe 34 und einem radial inneren Flasch des Statorträgers 502 wirksam. Der Statorträger 502 ersetzt somit den Deckel 28 des Ausführungsbeispiels der Fig. 1 und begrenzt den die Doppelkupplung aufnehmenden Aufnahmeraum 18, der als Nassraum dient.

Der Statorträger 502 kann über Passstifte 510 an der Antriebseinheit (Motor) zentriert sein und kann an der Antriebseinheit angeschraubt sein. Das Getriebegehäuse kann an der Antriebseinheit oder/und am Statorträger befestigt sein, und zwar radial innerhalb oder/und radial außerhalb des Luftspalts 440 der Elektromaschine 400.

Die Montage der Antriebseinheit 11 der Fig. 9 erfolgt am besten auf folgende Weise: Der Torsionsschwingungsdämpfer 300 samt der Rotoranordnung 430 wird an der Kurbelwelle anmontiert. Es wird dann der Statorträger 502 samt der Statoranordnung 418 an der Antriebseinheit montiert, wofür der Statorträger eine Führungsschiene 512 aufweist, die über die Rotoranordnung 430 gleitet. Unabhängig davon wird die Doppelkupplung 12 in die Gehäuseglocke des Getriebes eingesetzt. Danach werden das Getriebe und die Antriebseinheit (der Motor) zusammengefügt, wobei einerseits die den Torsionsschwingungsdämpfer mit der Doppelkupplung verkoppelten Verzahnungen in gegenseitigen Eingriff gebracht werden und andererseits der Radialwellendichtring 54 ordnungsgemäß zwischen dem inneren Flansch des Statorträgers 502 und der Kupplungsnabe 34 angeordnet wird.

Es wird noch darauf hingewiesen, dass beim gezeigten Ausführungsbeispiel die Verzahnung zwischen dem Nabenteil 302 und der Kupplungsnabe 34 radial innerhalb der Kurbelwellenschrauben 316 angeordnet ist, um die radiale Abmessung der Kupplungsnabe 34 und dementsprechend der Durchmesser des Radialwellendichtrings 54 vergleichsweise klein zu halten, so dass Reibungsverluste und der Verschleiß des Radialwellendichtrings minimiert werden.

Eine andere Möglichkeit für die Montage ist, dass der Torsionsschwingungsdämpfer 300 samt der Rotoranordnung 430 und der Statoranordnung 418 einschließlich dem Statorträger 502 als vormontierte Einheit an der Kurbelwelle bzw. dem Motorblock angeschraubt werden, wobei eine radiale Verriegelung der Rotoranordnung 430 einerseits und der Statoranordnung 418 andererseits vorteilhaft vorgesehen werden könnte. In Abweichung von der gezeigten Ausführungsform müsste der Innendurchmesser des Radialwellendichtrings bzw. dessen Sitz am Statorträger 502 radial außerhalb der Kurbelwellenverschraubung 316 liegen, um das erste Deckblech 306 am Koppelende 16 der Kurbelwelle anbringen zu können (andernfalls wären die Schrauben 316 nicht zugänglich). Unabhängig hiervon wird die Doppelkupplung 12 am Getriebe montiert. Anschließend werden das Getriebe und die Antriebseinheit zusammengefügt mit Verschraubung des Getriebes am Statorträger 502.

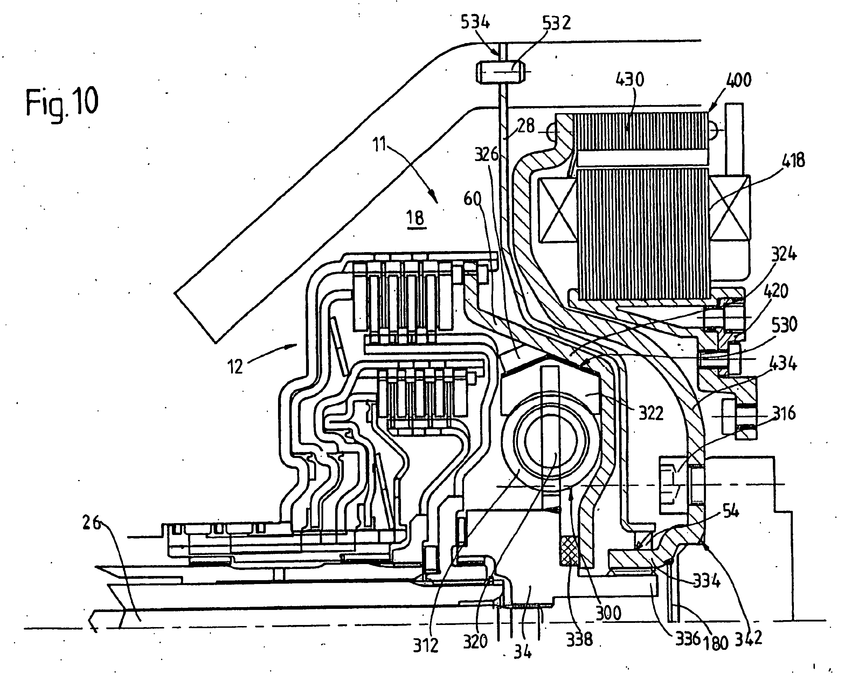

Das Beispiel der Fig. 10 entspricht hinsichtlich der Doppelkupplung 12 und der Integration des Torsionsschwingungsdämpfers 300 darin im Wesentlichen dem Ausführungsbeispiel der Fig. 3, so dass auf die Ausführungen zu dieser Figur verwiesen werden kann. Erwähnt werden sollte noch, dass die Gleitelemente und Federschuhe 322 in einer Gleitschale 530 geführt sind, um die bei Relativverdrehungen zwischen der Kupplungsnabe 34 und dem Momentenübertragungsglied 60 im Torsionsschwingungsdämpfer auftretende Reibung zu minimieren. Anstelle der Flexplatte 332 ist eine Trägeranordnung 434 an der Kurbelwelle angeschraubt, die die Rotoranordnung 430 einer Elektromaschine 400 trägt. Die Elektromaschine 400 entspricht der Elektromaschine 400 der Fig. 20, wenn man davon absieht, dass gemäß Fig. 10 der Torsionsschwingungsdämpfer 300 nicht mit der Elektromaschine integriert ist, sondern in die Doppelkupplung 12 integriert ist. Die Trägeranordnung 434 erfüllt also nur noch insoweit eine Doppelfunktion, als dass sie einen Koppelflansch 334 aufweist, der über Verzahnungen mit dem Koppelflansch 336 der Kupplungsnabe 34 koppelt. Der Torsionsschwingungsdämpfer 300 ist radial innerhalb der Statoranordnung 418 angeordnet und überlappt sich teilweise axial mit dieser.

Erwähnt werden sollte noch, dass bei 342 ein O-Ring vorgesehen seien könnte, insbesondere wenn auf das eingeschweißte Dichtblech 180 verzichtet wird.

Der Deckel 28 ist mittels Passstiften 532 am Getriebe zentriert und in einen Fügespalt zwischen Getriebe und Antriebseinheit aufgenommen. Zum Getriebe hin ist der Fügespalt bei 534 abgedichtet, so dass der als "äußerer Nassraum" dienende Aufnahmeraum hinreichend zur Antriebseinheit hin abgedichtet ist.

Es soll noch auf folgende Möglichkeiten hingewiesen werden: Beim gezeigten Ausführungsbeispiel ist die Dichtscheibe 180 am Koppelflansch 334 angeschweißt. Sie könnte aber auch eingeklipst sein. Die Gleitschale 530 braucht nicht zwingend mit Gleitelementen und dergleichen kombiniert sein, die Dämpfungselemente, insbesondere Dämpferfedern, können auch direkt in die Gleitschale aufgenommen sein. Betreffend den zwischen dem Deckel 28 und dem Koppelflansch 334 angeordneten Radialwellendichtring wurde bei der in Fig. 22 gezeigten Ausführungsform der Durchmesser sehr gering gehalten; dieser liegt noch innerhalb der Kurbelwellenschrauben 316. Hierdurch werden Reibungsverluste und Verschleiß am Radialwellendichtring minimiert. Wie schon erwähnt wurde, dient der Träger 434 für die Rotoranordnung 430 gleichzeitig als Abtriebselement zur Ankopplung der Eingangsseite der Doppelkupplung, die der Primärseite des Torsionsschwingungsdämpfers entspricht. Unter Vermittlung der Kupplungsnabe 34 ist auch die Antriebswelle 26 der Ölpumpe an diesem Abtriebselement angekoppelt, wobei der Momentenfluss zur Pumpe nicht über den Torsionsschwingungsdämpfer verläuft.

Die Montage des Antriebssystems 11 in einem Antriebssstrang kann zweckmäßig beispielsweise auf folgende Weise erfolgen: Es wird die Statoranordnung 418 am Motorblock montiert. Anschließend wird der Rotorträger 434 samt der daran angebrachten Rotoranordnung 430 an der Kurbelwelle montiert. Anschließend wird das Dichtblech 28 mit dem Radialwellendichtring 54 in Stellung gebracht und am Motor montiert. Unabhängig davon wird die Doppelkupplung 12 mit dem darin integriertem Torsionsschwingungsdämpfer 300 als vormontierte Einheit am Getriebe in der Getriebeglocke montiert. Schließlich werden das Getriebe und der Motor zusammengefügt unter Herstellung der Drehmitnahmeverbindung zwischen den Koppelflanschen 334 und 336.

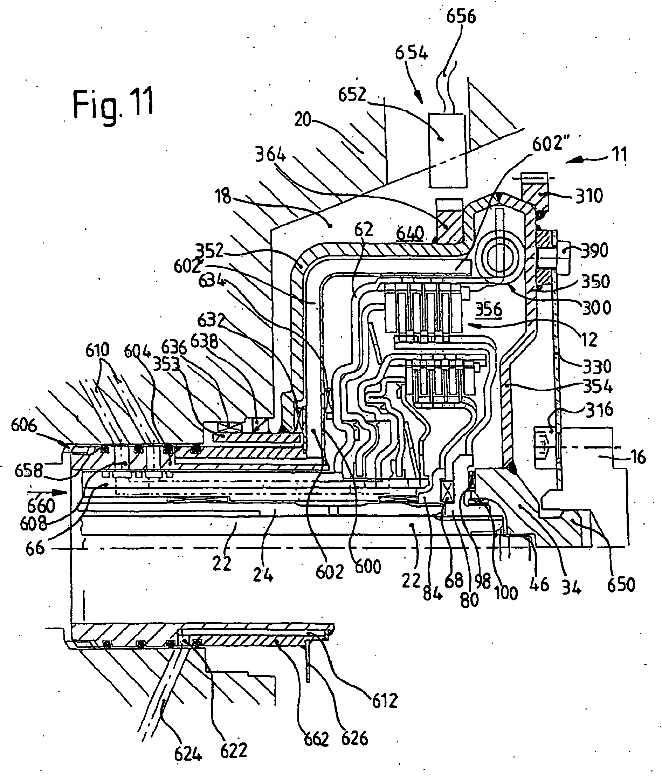

Fig. 11 zeigt eine vorteilhafte Weiterbildung des Antriebssystems 11 bzw. der Doppelkupplung 12 der Fig. 7. Um radial außen im von den Halbschalen 350, 352 gebildeten Kupplungsgehäuse 354 sich ansammelndes und mit dem Gehäuse und den Außenlamellenträgern mitrotierendes Kühlöl aus dem Nassraum 356 abführen zu können, ist im Nassraum ein stationärer Schaufelträger 600 mit Schaufeln 602 angeordnet. Dieser Schaufelträger ist über eine Lagernabe 604 mittels einer Verzahnung 606 drehfest mit dem Getriebegehäuse 20 verbunden. Die Lagernabe weist Ölzulaufbohrungen 608 auf, über die Druckölzuführbohrungen 610 im Kupplungsgehäuse an Druckölkanälen des auch als Ölzufuhrhülse bezeichenbaren Ringteils 66 angeschlossen sind.

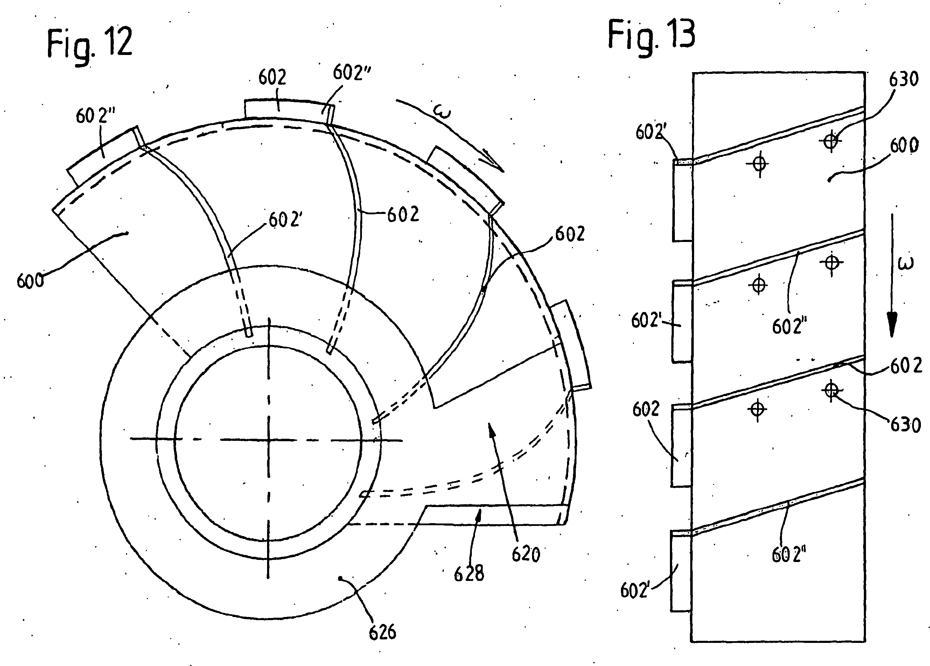

Das den Lamellenkupplungsanordnung zugeführte Kühlöl wird spätestens von der rotierenden Wandung 354 durch Reibung in Rotation gebracht. Der umlaufende Kühlölstrom wechselwirkt mit den feststehenden Schaufeln 602. Da die Schaufeln am Umfang des Schaufelträgers 600 schräg angeordnet sind (vgl. Fig. 12), wird das Öl in axialer Richtung, nämlich in Richtung zum Getriebe hin, abgelenkt. Das Öl fließt am feststehenden Schaufelträger 600 durch die Schwerkraft radial nach innen in einen Ringspalt 612 der Lagernabe 604.

Das von dem Seitenwandabschnitt der Halbschale 352 durch Reibung mitgenommene Öl wechselwirkt ebenfalls mit Abschnitten der gekrümmten Schaufeln 602 und wird durch diese Wechselwirkung in Richtung nach radial innen bzw. unten abgelenkt und gelangt dann ebenfalls in den Ringspalt 612.

Von den Schaufeln "nicht aufgefangenes bzw. nicht abgefangenes" Öl, das durch den Seitenwandabschnitt der Halbschale 352 in Umfangsrichtung mitgenommen wird, wird von einem stationären Ölsammelblech 620 aufgefangen. Das Ölsammelblech bildet zusammen mit zugeordneten Schaufeln 602 einen einseitig geöffneten Auffangraum. Dadurch kann das Öl nur entlang der betreffenden Schaufel 602 in den Ringspalt 612 fließen. An der Unterseite des Ringspalts befindet sich eine oder befinden sich mehrere Öfablaufbohrungen 622, durch die das abfließende Kühlöl in eine Ölablaufbohrung 624 des Getriebegehäuses 20 und damit beispielsweise in den Ölsumpf des Getriebes gelangt.

Die beschriebene Konstruktion gewährleistet, dass das in den Nassraum eingeleitete Kühlöl drucklos zurückgeführt werden kann, so dass der sich im Betrieb einstellende Füllstand an Kühlöl in einem radial äußeren Ringbereich beispielsweise so einstellbar ist, dass die Lamellen der radial äußeren Kupplungen nicht im Kühlöl eintauchen und damit Schleppmomente vermieden werden. Man kann beispielsweise so erreichen, dass die Kupplungen beim Gangeinlegen kein oder nur ein geringes Schleppmoment haben. Betreffend die Torsionsschwingungsdämpferanordnung 300 ist es in der Regel vorteilhaft, wenn deren Dämpferelemente in einem "Ölbad" angeordnet sind.

Das Umlenken des rotierenden Kühlöls nach radial innen bzw. zur Mitte der Kupplung hin mittels der Schaufeln 602 ist besonders leicht aus Fig. 12 verständlich. Der Pfeil ω repräsentiert die Drehrichtung der Kupplung und damit den Ölfluss. Man erkennt, dass das Ölsammelblech 620 von einem radial vorstehenden Abschnitt eines Lagerblechs 626 gebildet ist, welches auch in Fig. 11 zu erkennen ist. Zwischen dem Ölsammelblech 620 und einem benachbarten Abschnitt des als im Wesentlichen geschlossene Wandung ausgeführten Schaufelträgers 600 ist ein Spalt ausgebildet, der nach unten durch einen umgebogenen Bodenabschnitt 628 des Ölsammelblechs 620 im Wesentlichen verschlossen sein kann und nach oben hin in einen Spalt zwischen dem Schaufelträger 600 und der Innenoberfläche des Seitenabschnitts der Halbschale 352 übergeht, in den die Schaufeln 602 hineinragen.

Damit das in der oberen Hälfte der Doppelkupplung nach radial außen aus dem Lamellenträger 62 herausgeschleuderte Kühlöl sich nicht zwischen dem Außenlamellenträger 62 und der Innenseite des wandungsartigen Schaufelträgers 600 staut und leichter in einen den Außenlamellenträger im oberen Kupplungsbereich radial außen umgebenden Spalt zwischen der Innenoberfläche des oberen Wandungsabschnitts der Halbschale 352 und dem benachbarten Schaufelträgerabschnitt gelangt (in diesen Spalt ragen die Schaufeln 602 hinein), können im Schaufelträger Bohrungen 630 vorgesehen sein, die in Fig. 13 dargestellt sind. Fig. 13 zeigt eine Abwicklung des oberen Bereichs des Schaufelträgers 600, und es sind die Schaufeln 602 zu erkennen. 602' sind die in Richtung zum Seitenwandabschnitt der Halbschale 352 axial vom Schaufelträger 600 in den genannten Spalt vorstehenden Schaufelabschnitte. 602" bezeichnet Abschnitte der Schaufeln, die vom Schaufelträger 600 radial in den die Kupplungsanordnung umgebenden Ringspalt vorstehen.

Der Schaufelträger 600 und somit auch die Lagernabe 604 wird über Axiallager 632 bzw. 634 gegen axialen Versatz zur rotierenden Halbschale 352 bzw. zum rotierenden Außenlamellenträger 62 der Außenkupplung axial gelagert. Das Axiallager 632 stützt das Lagerblech 626 an der Halbschale 352 ab.

Die primärseitige Wandung 354 ist im Getriebegehäuse 20 über eine mit der Wandung drehfest verbundene Lagerhülse 353 und ein Radiallager 636 gelagert. Eine Radialwellendichtung 638 dichtet den Trockenraum 640 außerhalb des Gehäuses 354 gegenüber dem Nassraum 356 ab.

In Abweichung von der Ausführungsform gemäß Fig. 7 ist die Gehäusehalbschale 350 an der auch als Zentralnabe bezeichenbaren Kupplungsnabe 34 angeschweißt, so dass zuverlässig eine hohe Dichtheit erreichbar ist.

Der Innenlamellenträger der radial äußeren Kupplung ist an seiner Nabe 80 über das Axiallager 98 und über ein Radiallager 100 an der Kupplungsnabe 34 gelagert und stützt sich über das Axiallager 68 an der Nabe 84 des Innenlamellenträgers der radial inneren Kupplung ab. Auf einen Sicherungsring auf der Getriebeeingangswelle 22 entsprechend dem Sicherungsring 96 gemäß Fig. 1 ist bei der vorliegenden Ausführungsform verzichtet, so dass eine die vollständige Doppelkupplung 12 einschließlich dem Gehäuse 354 und der Nabe 34 umfassende Baueinheit einfach getriebeseitig montierbar ist. Eine axiale Abstützung dieser Baueinheit in Richtung zur Antriebseinheit kann unter Vermittlung der Flexplatte 330 erfolgen. Man kann die Doppelkupplung einschließlich der Wandung aber auch einzeln montieren und dann in einem letzten Montageschritt die Halbschale 352 (auch als Deckel bezeichenbar) an der (ggf. auch als Primärschwungrad bezeichenbaren) Halbschale 350 anschweißen.

Die Kupplungsnabe 34 ist mit einem Führungszapfen 650 ausgeführt, der in eine Ausnehmung des Koppelendes 16 der Kurbelwelle eingreift und so die Doppelkupplung in Bezug auf die Antriebseinheit zentriert.

Eine ggf. vorgesehene, primärseitige Zusatzmasse 364 kann gewünschtenfalls auch als Inkrementgeber, z. B. für eine Drehzahlmessung, genutzt werden. Ein entsprechender Sensor (ggf. Drehzahlsensor) 652 kann durch eine Öffnung 654 im Getriebegehäuse 20 in den Trockenraum 640 ragen. 656 bezeichnet ein Anschlusskabel des Sensors.

Zu ergänzen ist noch, dass 658 Dichtungen bezeichnet, die zwischen dem Getriebegehäuse und der Lagernabe 604 wirksam sind und die Druckölanschlüsse abdichten. Der Pfeil 660 steht für das in den Nassraum 356 zuzuführende Kühlöl, das in axialer Richtung parallel zu den Getriebeeingangswellen zugeführt wird, etwa so, wie im Zusammenhang mit Fig. 1 erläutert wurde. 662 bezeichnet eine Lagerhülse, die den Ringspalt 612 begrenzt und das Lagerblech 626 hält.

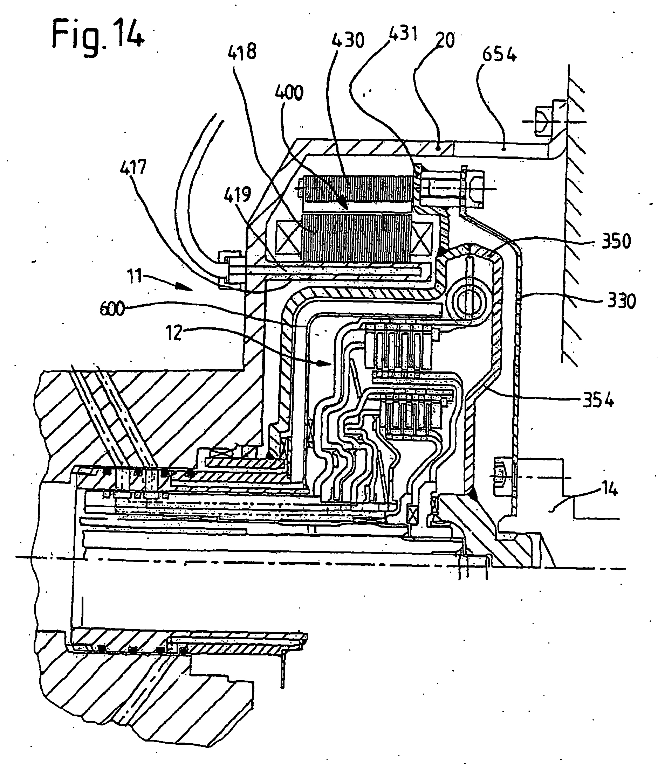

Fig. 14 zeigt eine Weiterbildung der Doppelkupplung 12 der Fig. 11, bei der diese mit einer Elektromaschine 400 kombiniert ist. Eine Rotoranordnung 430 ist von einem radial außen an der Wandung 354 angeschweißten Rotorträger 431 gehalten. Es handelt sich um eine Elektromaschine vom Außenläufertyp. Demgemäß ist die Statoranordnung 418 radial innerhalb der Rotoranordnung 430 angeordnet. Als Statorträger fungiert ein Halteflansch 417 des Getriebegehäuses 20, der mit Kühlkanälen 419 für die Kühlung des Stators ausgeführt sein kann. Die Kühlkanäle können über Schläuche an einem Kühlkreislauf des Motors angeschlossen werden. Man könnte auch einen eigenen Kühlkreislauf für den Stator vorsehen.

Die Montage des Antriebssystems 12 kann wie folgt erfolgen: Es wird die Flexplatte 330 an der Abtriebswelle 14 (ggf. Kurbelwelle 14) angeschraubt. Die Statoranordnung 418 wird auf dem Statorträger befestigt. Der Rotorträger 431 wird an dem Gehäuse 354 angeschweißt. Die Doppelkupplung 12 samt dem sich im Betrieb mitdrehenden Gehäuse 354 und die Rotoranordnung 430 werden, zusammen mit dem in den Nassraum integrierten Torsionsschwingungsdämpfer und dem feststehenden Schaufelträger 600, zu einer Einbaueinheit zusammenmontiert und dann als Einbaueinheit oder Einbaumodul ins Getriebe gesteckt. Damit ist das getriebeseitige Teilsystem des Antriebssystems 11 fertig, es braucht dann nur noch das Getriebe am Motor montiert werden und der Rotorträger 431 über Verschraubungen mit einem radial äußeren Befestigungsabschnitt der Flexplatte 330 verbunden werden. Die Axialabstützung der Doppelkupplung in Richtung zur Antriebseinheit erfolgt unter Vermittlung der Flexplatte 330, da im Hinblick auf die vorstehend vorgeschlagene einfache Montagemöglichkeit auf einen Sicherungsring entsprechend dem Sicherungsring 96 gemäß Fig. 1 verzichtet wurde.

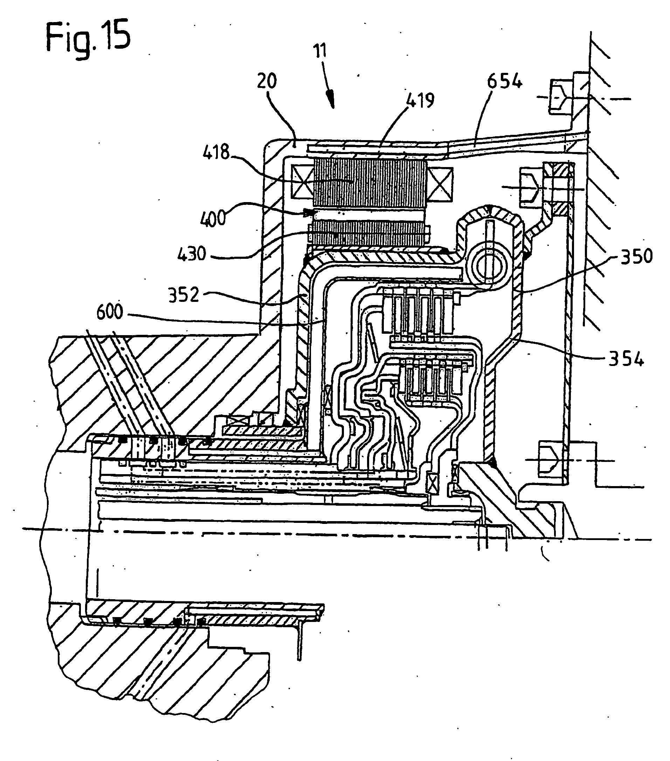

Fig. 15 zeigt eine Abwandlung des Antriebssystems 11 der Fig. 14, bei der die Elektromaschine 400 (der Kurbelwellenstartergenerator 400) vom Innenläufertyp ist. Die Rotoranordnung 430 ist hierbei direkt radial außen an der Halbschale 352 angebracht. Die Statoranordnung 418 ist am Getriebegehäuse 20 befestigt, wodurch eine bessere Kühlung für den Stator erreicht werden kann. Es können ggf. auch Kühlkanäle 419 im Statorträger bzw. im Getriebegehäuse vorgesehen sein, die beispielsweise an den Kühlkreislauf der Antriebseinheit (insbesondere Brennkraftmaschine) angeschlossen sein können. Die Montage des Antriebssystems erfolgt vorzugsweise auf die im Zusammenhang mit Fig. 14 erläuterte Art und Weise.

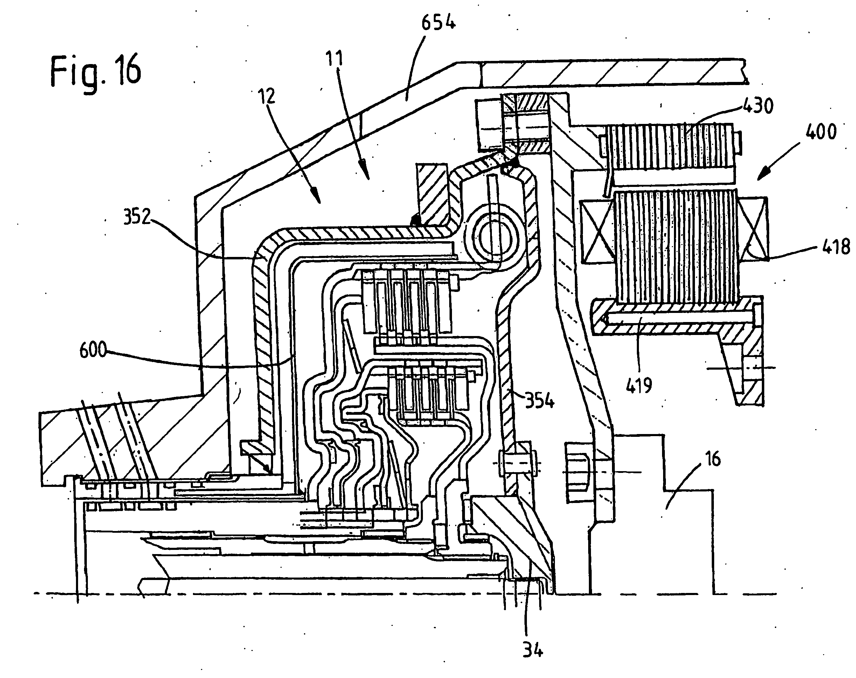

Ein weiteres Ausführungsbeispiel eines erfindungsgemäßen Kupplungssystems in Kombination mit einer Elektromaschine ist in Fig. 16 gezeigt. Die Elektromaschine 400 ist hier als Außenläufermaschine ausgeführt. Die in Fig. 16 dargestellte Konstruktion ist aufgrund der vorstehenden Erläuterungen der anderen Ausführungsbeispiele ohne Weiteres verständlich, so dass weitere Ausführungen nicht geboten sind. Auch im Falle der Konstruktion der Fig. 16 könnte man eine Zentrierung der Kupplungsnabe 34 am Koppelende 16 der Abtriebswelle 14 vorsehen.

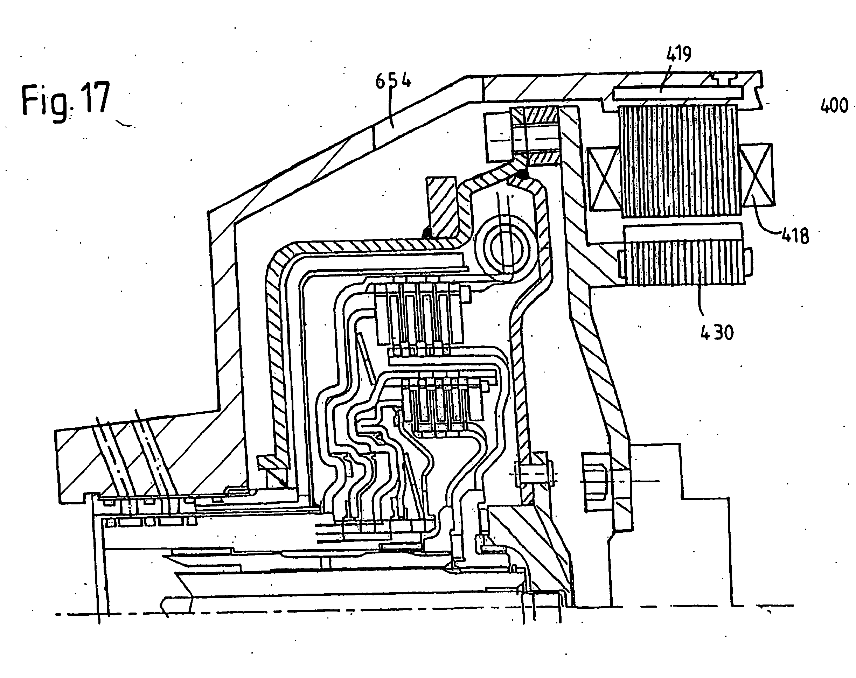

Fig. 17 zeigt eine Variante, bei der die Elektromaschine 400 als Maschine vom Innenläufertyp ausgeführt ist. Auch diese Konstruktion ist ohne Weiteres verständlich.

Weitere Einzelheiten der Doppelkupplungen 12 bzw. des Antriebssystems gemäß den verschiedenen Ausführungsbeispielen und insbesondere Unterschiede zwischen den verschiedenen Doppelkupplungen sind vom Fachmann ohne Weiteres den Figuren entnehmbar.

## Patentansprüche

1. Mehrfach-Kupplungseinrichtung, insbesondere eine Doppel-Kupplungseinrichtung, für die Anordnung in einem Antriebsstrang eines Kraftfahrzeugs zwischen einer Antriebseinheit und einem Getriebe, wobei die Kupplungseinrichtung (12) eine der Antriebseinheit zugeordnete Eingangsseite (34; 354) und wenigstens zwei dem Getriebe zugeordnete Ausgangsseiten (80, 84) aufweist, wobei die Kupplungseinrichtung (12) eine einer ersten (80) der Ausgangsseiten zugeordnete erste Lamellen-Kupplungsanordnung (64) und eine einer zweiten (84) der Ausgangsseiten zugeordnete zweite Lamellen-Kupplungsanordnung (72) aufweist zur Momentenübertragung zwischen der Antriebseinheit und dem Getriebe, wobei die Lamellen-Kupplungsanordnungen (64, 72) nasslaufende Lamellen-Kupplungsanordnungen sind, die in einem Nassraum (356) der Kupplungseinrichtung angeordnet sind, wobei eine Wandung (354) die Eingangsseite bildet oder Teil derselben ist oder mit dieser (34) drehfest verbunden ist, wobei die Wandung (354) den Nassraum (356) von einem außerhalb der Wandung (354) befindlichen Trockenraum (640) abgrenzt, wobei ein Momentenübertragungsweg zwischen der Eingangsseite (34) und den Ausgangsseiten (80, 84) der Mehrfach-Kupplungseinrichtung (12) über die Wandung (354) verläuft,
**dadurch gekennzeichnet,**
**dass** die Eingangsseite über die Wandung (354) und eine Torsionsschwingungsdämpferanordnung (300) mit einem ersten Lamellenträger (62) für ein in dem Nassraum (356) angeordnetes Lamellenpaket (76) der ersten Lamellen-Kupplungsanordnung (64) und mit einem zweiten Lamellenträger (70) für ein in dem Nassraum (356) angeordnetes Lamellenpaket (74) der zweiten Lamellen-Kupplungsanordnung (72) in Drehmitnahmeverbindung steht, wobei die Torsionsschwingungsdämpferanordnung (300) in den Nassraum integriert ist und zwischen den Lamellenträgern (62; 70) der Lamellen-Kupplungsanordnungen (64; 72) und der Eingangsseite (34; 354) wirkt.

2. Mehrfach-Kupplungseinrichtung nach Anspruch 1, **gekennzeichnet durch** eine im Nassraum angeordnete Betriebsmedium-Abführeinrichtung (600, 602, 620), die Betriebsmedium unter Schwerkraft-Einwirkung oder/und unter Ausnutzung von in sich bewegendem Betriebsmedium gespeicherter kinetischer Energie aus einem - bezogen auf die Drehachse der Kupplungseinrichtung - radial äußeren, - bezogen auf eine Vertikalrichtung - oberen Bereich des Nassraums (356) zu einem radial inneren, - bezogen auf die Vertikalrichtung - weiter unten liegenden Bereich des Nassraums (356) und dann aus dem Nassraum (356) heraus abführt, um einen Betriebsmediumkreislauf **durch** den Nassraum (356) vorzusehen.

3. Mehrfach-Kupplungseinrichtung nach Anspruch 2, **dadurch gekennzeichnet, dass** die Betriebsmedium-Abführeinrichtung wenigstens ein gegenüber der Wandung (354) stationäres, dieser zumindest bereichsweise benachbartes Abführelement (600) mit wenigstens einer das Betriebsmedium führenden oder/und ablenkenden Führungsfläche aufweist.

4. Mehrfach-Kupplungseinrichtung nach Anspruch 3, **dadurch gekennzeichnet, dass** wenigstens ein wandungsartiger Abschnitt des Abführelements (600) wenigstens einen, wenigstens eine der Lamellen-Kupplungsanordnungen (64; 72) zumindest bereichsweise radial außen umgebenden, in einem bezogen auf die Vertikalrichtung oberen Bereich der Kupplungseinrichtung angeordneten ersten Führungsflächenabschnitt aufweist, der zusammen mit einer Innenoberfläche eines benachbarten Abschnitts der Wandung (354) einen ersten Spalt begrenzt, der Betriebsmedium aufnehmen kann.

5. Mehrfach-Kupplungseinrichtung nach Anspruch 3 oder 4, **dadurch gekennzeichnet, dass** wenigstens ein wandungsartiger Abschnitt des Abführelements (600) wenigstens einen auf einer axialen Seite der Kupplungsanordnungen angeordneten, sich in radialer bzw. vertikaler Richtung erstreckenden zweiten Führungsflächenabschnitt aufweist, der zusammen mit einer Innenoberfläche eines radial äußeren Abschnitts der Wandung (354) einen zweiten Spalt begrenzt, der Betriebsmedium aufnehmen kann, wobei der zweite Führungsflächenabschnitt - sofern vorhanden - am ersten Führungsflächenabschnitt angeschlossen ist und der zweite Spalt - sofern vorhanden - am ersten Spalt angeschlossen ist.

6. Mehrfach-Kupplungseinrichtung nach einem der Ansprüche 3 bis 5, **dadurch gekennzeichnet, dass** das Abführelement (600) wenigstens eine Führungsschaufel (602) aufweist, die rotierendes Betriebsmedium in radialer oder/und axialer Richtung ablenkt.

7. Mehrfach-Kupplungseinrichtung nach Anspruch 6, **dadurch gekennzeichnet, dass** die Führungsschaufel (602) sich entlang einer Führungsfläche eines Schaufelträgers (600) erstreckt und von dieser Führungsfläche in Richtung zu einer Innenoberfläche der Wandung (354) vorsteht, in den ersten bzw. zweiten Spalt.

8. Mehrfach-Kupplungseinrichtung nach Anspruch 7, **dadurch gekennzeichnet, dass** der in der Art einer Wandung ausgeführte Schaufelträger (600) in einem radial außerhalb wenigstens einer der Kupplungsanordnungen (64; 72) liegenden Abschnitt Betriebsmedium-Durchlassöffnungen (630) aufweist, um Betriebsmedium nach radial außen, in den ersten Spalt, durchzulassen.

9. Mehrfach-Kupplungseinrichtung nach einem der Ansprüche 5 bis 8, **dadurch gekennzeichnet, dass** der sich über einen vertikal oberen Bereich der Kupplungseinrichtung erstreckende erste Spalt in einem radial mittleren Bereich der Kupplungseinrichtung an einem aus dem Nassraum (356) herausführenden Abführkanal (612) angeschlossen und nach unten verschlossenen oder verengt ist, sodass zumindest ein wesentlicher Teil des im Spalt geführten Betriebsmedium über den Abführkanal (612) abfließt.

10. Mehrfach-Kupplungseinrichtung nach einem der Ansprüche 2 bis 9 **dadurch gekennzeichnet, dass** das Abführelement (600) das abzuführende Betriebsmedium zu einem/dem in einer Lagerhülsenanordnung der Kupplungseinrichtung ausgebildeten Abführkanal (612) führt, der an einer im Getriebegehäuse ausgebildeten Abführleitung (624) angeschlossen oder anschließbar ist.

11. Mehrfach-Kupplungseinrichtung nach Anspruch 10, **dadurch gekennzeichnet, dass** die Lagerhülsenanordnung wenigstens eine ein von der Wandung (354) gebildetes Kupplungsgehäuse (354) verdrehbar lagernde erste Lagerhülse (353), wenigstens eine wenigstens eine stationäre Komponente (600) der Betriebsmedium-Abführeinrichtung (600, 602, 620) lagernde, unmittelbar gegen Verdrehung abgestützte oder abstützbare zweite Lagerhülse (604) und wenigstens eine eingangsseitige Drehkomponenten, insbesondere Lamellenträger, der Kupplungseinrichtung an radial geschachtelten Getriebeeingangswellen lagernde dritte Lagerhülse (66) aufweist.

12. Antriebsstrang für ein Kraftfahrzeug, umfassend eine als Brennkraftmaschine ausgeführte Antriebseinheit, ein Getriebe und eine zwischen der Antriebseinheit und dem Getriebe angeordnete Mehrfach-Kupplungseinrichtung (12) nach einem der vorhergehenden Ansprüche.

## Claims

1. Multiple clutch device, in particular a dual clutch device, for arrangement in a drivetrain of a motor vehicle between a power unit and a transmission, the clutch device (12) having an input side (34; 354) assigned to the power unit and at least two output sides (80, 84) assigned to the transmission, the clutch device (12) having a first multiple disc clutch arrangement (64) assigned to a first (80) of the output sides and a second multiple disc clutch arrangement (72) assigned to a second (84) of the output sides for transmitting torque between the power unit and the transmission, the multiple disc clutch arrangements (64, 72) being wet-running multiple disc clutch arrangements, which are arranged in a wet chamber (356) of the clutch device, a wall (354) forming the input side or being a part thereof, or being rotationally locked to this (34), the wall (354) separating the wet chamber (356) from a dry chamber (640) situated outside the wall (354), a torque transmission path running between the input side (34) and the output sides (80, 84) of the multiple clutch device (12) via the wall (354), **characterized in that** the input side is in a rotary driving connection via the wall (354) and a torsional vibration damper arrangement (300) with a first multiple-disc carrier (62) for a multiple disc assembly (76), arranged in the wet chamber (356), of the first multiple disc clutch arrangement (64) and with a second multiple-disc carrier (70) for a multiple disc assembly (74), arranged in the wet chamber (356), of the second multiple disc clutch arrangement (72), the torsional vibration damper arrangement (300) being integrated into the wet chamber and acting between the multiple-disc carriers (62; 70) of the multiple disc clutch arrangements (64; 72) and the input side (34; 354).

2. Multiple clutch device according to Claim 1, **characterized by** an operating medium drainage device (600, 602, 620), which is arranged in the wet chamber and which under the effect of gravity and/or using kinetic energy stored in moving operating medium drains operating medium from what is - in relation to the axis of rotation of the clutch device - a radially outer, vertically upper area of the wet chamber (356) to a radially inner, vertically lower area of the wet chamber (356) and then out of the wet chamber (356), in order to provide an operating medium circuit through the wet chamber (356).

3. Multiple clutch device according to Claim 2, **characterized in that** the operating medium drainage device has at least one drainage element (600), fixed in relation to the wall (354) and, at least in some areas, adjacent thereto, with at least one guide face guiding and/or diverting the operating medium.

4. Multiple clutch device according to Claim 3, **characterized in that** at least one wall-like section of the drainage element (600) has at least a first guide face section, arranged in a vertically upper area of the clutch device and at least in some areas radially outwardly enclosing at least one of the multiple disc clutch arrangements (64; 72), said guide face section together with an inner surface of an adjacent section of the wall (354) defining a first gap capable of receiving operating medium.

5. Multiple clutch device according to Claim 3 or 4, **characterized in that** at least one wall-like section of the drainage element (600) has at least a second guide face section, arranged on an axial side of the clutch arrangements and extending in a radial or vertical direction, said guide face section together with an inner surface of a radially outer section of the wall (354) defining a second gap capable of receiving operating medium, the second guide face section, where present, being connected to the first guide face section, and the second gap, where present, being connected to the first gap.

6. Multiple clutch device according to any one of Claims 3 to 5, **characterized in that** the drainage element (600) has at least one guide vane (602), which diverts rotating operating medium in a radial and/or axial direction.

7. Multiple clutch device according to Claim 6, **characterized in that** the guide vane (602) extends along a guide face of a vane carrier (600) and protrudes from this guide face towards an inner surface of the wall (354), into the first or second gap.

8. Multiple clutch device according to Claim 7, **characterized in that** in a section situated radially outside at least one of the clutch arrangements (64; 72), the vane carrier (600) designed in the nature of a wall has operating medium passages (630) to allow operating medium to pass radially outwards, into the first gap.

9. Multiple clutch device according to any one of Claims 5 to 8, **characterized in that** in a radially middle area of the clutch device the first gap extending over a vertically upper area of the clutch device is connected to a drainage duct (612) emerging from the wet chamber (356) and towards the bottom is either sealed or constricted so that at least a substantial proportion of the operating medium carried in the gap flows off via the drainage duct (612).

10. Multiple clutch device according to any one of Claims 2 to 9, **characterized in that** the drainage element (600) carries the operating medium to be drained to a/the drainage duct (612), which is formed in a bearing sleeve arrangement of the clutch device and which is or can be connected to a drainage line (624) that is formed in the transmission housing.

11. Multiple clutch device according to Claim 10, **characterized in that** the bearing sleeve arrangement comprises at least a first bearing sleeve (353) rotatably supporting a clutch housing (354) formed by the wall (354), at least a second bearing sleeve (604), which supports a fixed component (600) of the operating medium drainage device (600, 602, 620) and which is or can be torsionally braced directly, and at least a third bearing sleeve (66) supporting input-side rotational components, especially plate carriers, of the clutch device on radially nested transmission input shafts.

12. Drivetrain for a motor vehicle, comprising a power unit in the form of an internal combustion engine, a transmission and a multiple clutch device (12) according to any one of the preceding claims arranged between the power unit and the transmission.

## Revendications

1. Dispositif d'embrayage multiple, en particulier dispositif d'embrayage double, à disposer dans une ligne d'entraînement d'un véhicule automobile entre une unité d'entraînement et une boîte de vitesses, sachant que le dispositif d'embrayage (12) présente un côté d'entrée (34 ; 354) associé à l'unité d'entraînement et au moins deux côtés de sortie (80, 84) associés à la boîte de vitesse, sachant que le dispositif d'embrayage (12) présente, pour la transmission de couple entre l'unité d'entraînement et la boîte de vitesses, un premier ensemble d'embrayage à disques (64) associé à un premier (80) des côtés de sortie et un deuxième ensemble d'embrayage à disques (72) associé à un deuxième (84) des côtés de sortie, sachant que les ensembles d'embrayage à disques (64, 72) sont des ensembles d'embrayage à disques à fonctionnement humide, qui sont disposés dans une chambre humide (356) du dispositif d'embrayage, sachant qu'une paroi (354) constitue le côté d'entrée ou en fait partie ou est liée en rotation à celui-ci (34), sachant que la paroi (354) délimite la chambre humide (356) vis-à-vis d'une chambre sèche (640) qui se trouve à l'extérieur de la paroi (354), sachant qu'un chemin de transmission de couple entre le côté d'entrée (34) et les côtés de sortie (80, 84) du dispositif d'embrayage multiple (12) passe par la paroi (354), **caractérisé en ce que** le côté d'entrée est en liaison d'entraînement en rotation par le biais de la paroi (354) et d'un ensemble (300) d'amortisseur de vibrations de torsion avec un premier porte-disques (62) pour un paquet de disques (76) du premier ensemble d'embrayage à disques (64) disposé dans la chambre humide (356) et avec un deuxième porte-disques (70) pour un paquet de disques (74) du deuxième ensemble d'embrayage à disques (72) disposé dans la chambre humide (356), sachant que l'ensemble (300) d'amortisseur de vibrations de torsion est intégré dans la chambre humide et agit entre les porte-disques (62 ; 70) des ensembles d'embrayage à disques (64 ; 72) et le côté d'entrée (34 ; 354).

2. Dispositif d'embrayage multiple selon la revendication 1, **caractérisé par** un dispositif (600, 602, 620) d'évacuation de fluide de service disposé dans la chambre humide qui, afin de prévoir une circulation de fluide de service à travers la chambre humide (356), évacue du fluide de service, sous l'action de la gravité et/ou en utilisant l'énergie cinétique accumulée dans le fluide de service en mouvement, depuis une région radialement extérieure - relativement à l'axe de rotation du dispositif d'embrayage -, et supérieure - relativement à une direction verticale -, de la chambre humide (356), vers une région radialement intérieure, et située plus vers le bas - relativement à la direction verticale -, de la chambre humide (356), puis hors de la chambre humide (356).

3. Dispositif d'embrayage multiple selon la revendication 2, **caractérisé en ce que** le dispositif d'évacuation de fluide de service présente au moins un élément d'évacuation (600) stationnaire par rapport à la paroi (354), au moins sectoriellement voisin de celle-ci, et doté d'au moins une surface de guidage conduisant et/ou déviant le fluide de service.

4. Dispositif d'embrayage multiple selon la revendication 3, **caractérisé en ce qu'**au moins une partie du genre paroi de l'élément d'évacuation (600) présente au moins une première partie de surface de guidage disposée dans une région supérieure - par rapport à la direction verticale - du dispositif d'embrayage et entourant radialement à l'extérieur au moins sectoriellement au moins un des ensembles d'embrayage à disques (64 ; 72), laquelle délimite, conjointement avec une face supérieure intérieure d'une partie voisine de la paroi (354), une première fente qui peut recevoir du fluide de service.

5. Dispositif d'embrayage multiple selon la revendication 3 ou 4, **caractérisé en ce qu'**au moins une partie du genre paroi de l'élément d'évacuation (600) présente au moins une deuxième partie de surface de guidage disposée sur un côté axial des ensembles d'embrayage et s'étendant en direction radiale ou encore verticale, laquelle délimite, conjointement avec une face supérieure intérieure d'une partie radialement extérieure de la paroi (354), une deuxième fente qui peut recevoir du fluide de service, sachant que la deuxième partie de surface de guidage est raccordée - si elle est présente - à la première partie de surface de guidage et que la deuxième fente est raccordée - si elle est présente - à la première fente.

6. Dispositif d'embrayage multiple selon l'une quelconque des revendications 3 à 5, **caractérisé en ce que** l'élément d'évacuation (600) présente au moins une pale de guidage (602) qui dévie en direction radiale et/ou axiale le fluide de service rotatif.

7. Dispositif d'embrayage multiple selon la revendication 6, **caractérisé en ce que** la pale de guidage (602) s'étend le long d'une surface de guidage d'un porte-pale (600) et dépasse de cette surface de guidage en direction d'une face supérieure intérieure de la paroi (354), dans la première ou deuxième fente.

8. Dispositif d'embrayage multiple selon la revendication 7, **caractérisé en ce que** le porte-pale (600) réalisé à la manière d'une paroi présente, dans une région située radialement à l'extérieur d'au moins un des ensembles d'embrayage (64 ; 72), des ouvertures de passage de fluide de service (630) afin de laisser passer le fluide de service radialement vers l'extérieur, dans la première fente.

9. Dispositif d'embrayage multiple selon l'une quelconque des revendications 5 à 8, **caractérisé en ce que** la première fente, qui s'étend sur une région verticalement supérieure du dispositif d'embrayage, est raccordée dans une région radialement médiane du dispositif d'embrayage à un canal d'évacuation (612) menant hors de la chambre humide (356) et est fermée ou rétrécie vers le bas, de sorte qu'au moins une part importante du fluide de service dirigé dans la fente s'évacue par le canal d'évacuation (612).

10. Dispositif d'embrayage multiple selon l'une quelconque des revendications 2 à 9, **caractérisé en ce que** l'élément d'évacuation (600) mène le fluide de service à évacuer vers un/le canal d'évacuation (612) configuré dans un ensemble de manchon de palier du dispositif d'embrayage, canal qui est ou peut être raccordé à une conduite d'évacuation (624) configurée dans le carter de boîte.

11. Dispositif d'embrayage multiple selon la revendication 10, **caractérisé en ce que** l'ensemble de manchon de palier présente au moins un premier manchon de palier (353), recevant à rotation un carter d'embrayage (354) formé par la paroi (354), au moins un deuxième manchon de palier (604), soutenu ou pouvant être soutenu directement de manière bloquée en rotation et recevant au moins un composant stationnaire (600) du dispositif (600, 602, 620) d'évacuation de fluide de service, et au moins un troisième manchon de palier (66), recevant des composants rotatifs d'entrée, notamment des porte-disques, du dispositif d'embrayage sur des arbres d'entrée de boîte radialement emboîtés les uns dans les autres.

12. Ligne d'entraînement pour un véhicule automobile, comprenant une unité d'entraînement réalisée sous forme de moteur à combustion interne, une boîte de vitesses et un dispositif d'embrayage multiple (12) selon l'une quelconque des revendications précédentes, disposé entre l'unité d'entraînement et la boîte de vitesses.
